# EUROPÄISCHE PATENTSCHRIFT

(11) **EP 4 552 820 B1**
(45) Veröffentlichungstag und Bekanntmachung des Hinweises auf die Patenterteilung: **31.12.2025**
(21) Anmeldenummer: 23208895.5
(22) Anmeldetag: 09.11.2023
(51) Int. Cl.: B29C 45/26, B29C 45/33, B29C 45/27, B29C 45/44

(54) **SPRITZGUSSWERKZEUG MIT VERSCHIEBBAREN FORMEINSÄTZEN UND VERFAHREN ZUR HERSTELLUNG VON FORMTEILEN MIT DEM SPRITZGUSSWERKZEUG**
INJECTION MOULDING TOOL WITH DISPLACEABLE MOULD INSERTS AND METHOD FOR PRODUCING MOULDED PARTS WITH THE INJECTION MOULDING TOOL
MOULE D'INJECTION AVEC INSERTS DE MOULAGE DÉPLAÇABLES ET PROCÉDÉ DE FABRICATION DE PIÈCES MOULÉES AVEC L'OUTIL DE MOULAGE PAR INJECTION

(43) Veröffentlichungstag der Anmeldung: 14.05.2025
(73) Patentinhaber: ifw Manfred Otte GmbH, 4563 Micheldorf (AT)
(72) Erfinder: Demmel, Andreas, 4694 Ohlsdorf (AT)
(74) Vertreter: KLIMENT & HENHAPEL

(56) Entgegenhaltungen:
- EP-A1- 2 581 198
- CN-A- 111 251 544
- CN-A- 111 923 348
- KR-B1- 102 177 891

## Beschreibung

### GEBIET DER ERFINDUNG

Die Erfindung betrifft ein Spritzgusswerkzeug mit mehreren Kavitäten zur Herstellung von Formteilen aus Kunststoff. Weiters betrifft die Erfindung ein Verfahren zur Herstellung von Formteilen mit dem erfindungsgemäßen Spritzgusswerkzeug.

### STAND DER TECHNIK

Wenn mit einem Spritzgusswerkzeug mehrere Formteile bzw. Spritzgussteile aus Kunststoff gleichzeitig in einem Produktionszyklus produziert werden spricht man von einem Mehrkavitätenwerkzeug.

Im Folgenden werden die Begriffe "Formteil", "Spritzgussteil" und "Kunststoffteil" synonym verwendet und bezeichnen Spritzlinge bzw. Spritzgießlinge aus Kunststoff, die in einem Spritzgusswerkzeug hergestellt werden.

Der Begriff "Kavität" bezeichnet im Werkzeug- und Formenbau den Frei- bzw. Hohlraum zwischen zwei Teilen eines Umformwerkzeugs, in den der flüssige oder fließfähige Werkstoff, hier die Kunststoff-Schmelze, hineinfließt oder hineingepresst wird. Die Kavität wird auch als Formnest bezeichnet und bildet die Außenform des darin hergestellten Formteiles.

Bei bisher bekannten Ausführungen solcher Mehrkavitätenwerkzeuge werden mehrteilige Spritzgusswerkzeuge eingesetzt, die entlang einer Formtrennebene zumeist in zwei Werkzeugformhälften trennbar sind, um die hergestellten Formteile aus Kunststoff dem Spritzgusswerkzeug entnehmen zu können. Üblicherweise wird zwischen den zwei Werkzeugformhälften unterschieden, der sogenannten Auswerferseite und der Düsenseite, die jeweils auf Aufspannplatten einer Spritzgießmaschine montiert sind. Die Düsenseite ist meist jene starre Werkzeugformhälfte, die auf einer starren Aufspannplatte der Spritzgießmaschine montiert ist und die der Spritzeinheit zugewandt ist. Die Auswerferseite ist meist auf einer beweglichen Aufspannplatte der Spritzgießmaschine montiert und bildet die bewegliche Werkzeugformhälfte. Um in einem nächsten Produktionszyklus mit dem Spritzgusswerkzeug mehrere Formteile herstellen zu können, müssen die beiden Werkzeugformhälften zusammengeschoben und geschlossen werden. Man spricht hier vom Zufahren der Werkzeugformhälften. Nach erfolgtem Spritzguss und Erstarren der spritzgegossenen Formteile werden die beiden Werkzeugformhälften üblicherweise wieder auseinandergefahren.

Die Formteile aus Kunststoff verbleiben in der Regel in den Kavitäten auf der Auswerferseite, bis diese durch entsprechende Auswerfervorrichtungen aus dem Werkzeug bzw. aus der entsprechenden Werkzeugformhälfte gedrückt werden. Ebenfalls an der Auswerferseite sind üblicherweise Anschlüsse für sogenannte Kerneinsätze wie beispielsweise Kernzüge oder Kernschieber angeordnet. Als Kerneinsatz oder Innenformkern wird jener Teil eines Formwerkzeuges bezeichnet, der während des Spritzvorgangs in eine Kavität eingefahren ist und die Kontur eines meist innenliegenden bzw. inneren Hohlraumes im Kunststoff-Formteil formt. Der Kerneinsatz bzw. Innenformkern bildet also einen entsprechenden Hohlraum im Kunststoff-Formteil aus und ermöglicht während des Spritzvorgangs, dass dieser Hohlraum im Kunststoff-Formteil frei von Kunststoff-Schmelze bleibt. Nach Beendigung des Spritzvorgangs wird der Kerneinsatz relativ zum hergestellten Kunststoff-Formteil aus diesem herausgezogen oder herausgeschoben, wodurch der Hohlraum innerhalb des betreffenden Kunststoff-Formteils freigegeben wird.

Je nach Ausführung und relativer Bewegungsrichtung in Bezug zur betreffenden Werkzeugformhälfte, an der solche Kerneinsätze angeordnet sind, können derartige Kerneinsätze beispielsweise als Kernzüge oder Kernschieber ausgeführt sein. Die Kerneinsätze können beispielsweise beweglich verfahrbar geführt sein und relativ zu einer zumindest temporär unbewegten Werkzeugformhälfte des Spritzgusswerkzeugs verfahren werden. Im Sinne einer kinematischen Umkehr können die Kerneinsätze alternativ dazu ebenso statisch gelagert sein in Bezug zu einer beweglich verfahrbaren Werkzeugformhälfte.

Auch Mischformen sind denkbar, wobei sowohl die Kerneinsätze, als auch die entsprechende Werkzeugformhälfte relativ zueinander bewegt werden können, um vor Beginn bzw. nach Beendigung des Spritzvorgangs das Ein- und Ausfahren der Kerneinsätze in die entsprechenden Kavitäten bzw. hergestellten Formteile zu ermöglichen.

Als Kernzüge oder Kernschieber werden üblicherweise mechanisch, hydraulisch oder pneumatisch angetriebene Schieber mit einer Formkontur der Innenformkerne bezeichnet, die betätigt werden, um Hinterschneidungen der Formteile anfertigen zu können. Solche Kernzüge bzw. Kernschieber dienen also zum Entformen von seitlichen oder innenliegenden Konturabschnitten der Formteile.

Mehrkavitätenwerkzeuge zur Fertigung von Formteilen aus Kunststoff, welche solche Innenformkerne im Werkzeug benötigen, um den Innenbereich der Formteile zu entformen, werden bei herkömmlichen Werkzeugen möglichst so angeordnet, dass keine Hinterschnitte bei der Entformung entstehen. Bei der Herstellung beispielsweise von Fittings, also von Verbindungsstücken aus Kunststoff für Rohrleitungen, wird die Einformrichtung daher häufig so gewählt, dass die Kernzüge bzw. die Innenformkerne parallel zur Formtrennebene verlaufen. Beispielsweise zeigt die EP 2 332 713 A1 eine entsprechende Ausführungsform eines Mehrkavitätenwerkzeugs, bei der die Achsen der Kernzüge nicht parallel zur Formtrennebene verlaufen.

Bei diesem herkömmlichen Mehrkavitätenwerkzeug werden sogenannte Schrägschieber benötigt, die zum Entformen von seitlichen Hinterschneidungen der Formteile dienen. Die Schrägschieber sind als Schlitten an der zweiten Werkzeugformhälfte der Spritzgussform montiert, und verfahren entlang von Führungen schräg zur Öffnungs- und Schließrichtung der beiden Werkzeugformhälften in einer Ebene quer zu jener Ebene, die durch die Mittellinie der Hohlräume der herzustellenden Kunststoffformteile definiert ist. Die Gleitbewegung der Schrägschieber, die jeweils paarweise an gegenüberliegenden Randabschnitten einer Kavität angeordnet sind, erfolgt dabei folgendermaßen: Die paarweise angeordneten Schlitten der Schrägschieber können bei geöffneter Position der beiden Werkzeugformhälften entlang der schräg orientierten, V-förmig angeordneten Führungen auseinander bewegt werden, um die Kunststoffformteile aus ihrer jeweiligen Kavität entnehmen zu können. Beim Schließen der Spritzgussform, um in einem nachfolgenden nächsten Produktionszyklus damit erneut Kunststoffformteile herstellen zu können, bewegen sich die paarweise angeordneten Schlitten der Schrägschieber wiederum aufeinander zu.

Nachteilig an dieser Ausführung ist zumindest, dass der Verfahrweg der paarweise schräg auseinander geführten Schrägschieber vergleichsweise groß ist und bei der Konstruktion eines solchen herkömmlichen Spritzgusswerkzeugs jeweils beiderseits einer Kavität zur Herstellung von Kunststoffformteilen berücksichtigt werden muss. Dieses Schrägschiebersystem, wie beispielsweise aus der EP 2 332 713 A1 bekannt, führt damit unweigerlich zu großen Kavitätsabständen zwischen zwei nebeneinander benachbarten Kavitäten, um dazwischen zumindest den Platzbedarf für den doppelten Verfahrweg von zwei Schrägschiebern, die jeweils einer der betreffenden Kavitäten zugeordnet sind, zu gewährleisten.

Insbesondere bei Mehrkavitätenwerkzeugen führt diese aus der EP 2 332 713 A1 bekannte Anordnung daher vergleichsweise zu großen Abständen zwischen benachbarten Kavitäten. In nachteiliger Weise werden dadurch die Angusswege verlängert, wodurch der Spritzdruck in den Angusskanälen entsprechend ansteigt und die mehreren Kavitäten nicht gleichmäßig mit Kunststoffschmelze befüllt werden können.

Um die Achsabstände zwischen den Kernzügen benachbarter Kavitäten verringern zu können, gibt es auch Mehrkavitätenwerkzeuge, bei denen eine oder mehrere Kernzugachsen in Öffnungsrichtung des Werkzeugs, also im Wesentlichen senkrecht zur Formtrennebene ausgerichtet sind. Beispielsweise ist eine solche Ausführung eines Mehrkavitätenwerkzeugs mit Innenformkernen, wobei eine Achse eines Innenformkerns senkrecht zur Formtrennebene ausgerichtet ist, bereits aus der EP 2 862 691 B1 bekannt.

Abhängig von der jeweiligen Geometrie der herzustellenden Formteile aus Kunststoff kann es allerdings auch bei dieser Ausführungsvariante, bei der eine Kernzugachse in Öffnungsrichtung des Werkzeugs verläuft, erforderlich sein, zumindest eine der Werkzeugformhälften mit entsprechenden zusätzlichen Entformungsschiebern auszurüsten, die seitlich im Bereich der Außenkontur der jeweils hergestellten Spritzgussteile angeordnet sind, da die hergestellten Spritzgussteile sonst nicht dem Werkzeug entnommen werden könnten. Die in diesen Fällen erforderlichen Entformungsschieber sind nicht nur aufwendig, sondern vergrößern allerdings wiederum den Kavitätsabstand, wodurch in nachteiliger Weise wiederum die Angusslängen, also die Längen der Angusskanäle, weiter vergrößert werden. Insbesondere bei der Verarbeitung bestimmter, schwerfließender Spritzgussmaterialien wie beispielsweise Fittings aus Hart-PVC-Kunststoff ist dies jedoch problematisch. Die Angusskanäle werden in der Regel immer gekühlt, da das darin befindliche Spritzgussmaterial am Ende eines Produktionszyklus in gekühltem, erstarrtem Zustand gemeinsam mit den jeweils hergestellten Formteilen ausgeworfen werden muss, um für den nachfolgenden Produktionszyklus die entleerten Angusskanäle wieder für die Materialzufuhr bereitstellen zu können. Insbesondere beim Einsatz von schwerfließenden Spritzgussmaterialien kann es innerhalb von langen Angusskanälen aufgrund einer erhöhten Scherbelastung des Kunststoffmaterials zu Überhitzungen des Spritzgussmaterials kommen. Unerwünschte Materialfehler sowie optische Fehler aufgrund von Schlierenbildung des überhitzten Kunststoffmaterials können die Folgen sein, weshalb solche Formteile üblicherweise als Ausschussware verworfen werden müssen.

Bei zu langen Angusswegen kann es außerdem zu Verblockungen der Angusskanäle kommen und die mehreren Kavitäten können nicht gleichmäßig oder nicht mehr jeweils zur Gänze mit Kunststoffschmelze befüllt werden. Um dennoch entsprechende Produktionsmengen solcher Fittings zu ermöglichen, mussten bisher mehrere Spritzgießmaschinen mit entsprechenden Spritzgusswerkzeugen parallel betrieben werden. Aufgrund der hohen Investitionskosten sowie erhöhten Betriebskosten ist ein solcher Parallelbetrieb mehrerer Spritzgießmaschine jedoch unwirtschaftlich.

Die mögliche Fachzahl, also die Anzahl der möglichen Kavitäten, um mit einem Mehrkavitätenwerkzeug in einem Produktionszyklus mehrere Formteile gleichzeitig produzieren zu können, wird bei herkömmlichen Mehrkavitätenwerkzeugen im Wesentlichen durch den erforderlichen Kavitätsabstand limitiert. Die Kavitätsabstände herkömmlicher Mehrkavitätenwerkzeuge sind wiederum durch den Platzbedarf der Kernzüge bzw. der Innenformkerne sowie durch den Platzbedarf von zusätzlich erforderlichen Entformungsschiebern definiert.

Je nach Anwendungsfall kann weiters die Möglichkeit bestehen, durch entsprechende Konturanpassungen der herzustellenden Formteile Hinterschneidungen möglichst gänzlich zu vermeiden. Durch die damit einhergehenden Vergrößerungen der Wandstärken kann die Geometrie der Formteile aus Kunststoff so verändert werden, dass keine zusätzlichen Entformungsschieber, die jeweils seitlich der Formteile angeordnet sind, zum Entnehmen der hergestellten Formteile erforderlich sind. Durch solche Anpassungen der Wandstärken der Spritzgussteile können zwar die Spritzgusswerkzeuge ohne Entformungsschieber kompakter gestaltet werden, allerdings wird dadurch der Materialverbrauch zur Herstellung der einzelnen Formteile vergrößert und aufgrund der vergrößerten Wandstärken und der damit einhergehenden erheblichen Kühlzeitverlängerung der Formteile auch die Zeitdauer eines Produktionszyklus erhöht bzw. der Durchsatz an erzeugten Spritzgussteilen entsprechend verringert, was ebenfalls unwirtschaftlich ist. So führt beispielsweise eine Verdoppelung der Wandstärke eines Spritzgussteils in nachteiliger Weise zu einer Vervierfachung der Abkühlzeit des betreffenden Formteils.

Weiters ist aus der EP 2 581 198 A1 ein Spritzgusswerkzeug mit einem herkömmlichen Schiebersystem mit mehreren Kavitäten zur Herstellung von Formteilen aus Kunststoff bekannt geworden. Die Kavitäten werden jeweils durch zwei paarweise einander gegenüberliegende Schieber mit Formeinsätzen gebildet.

Benachbarte Kavitäten zur Herstellung der Spritzguss-Formteile sind jeweils ortsfest mit einem zwischenliegenden Abstand zueinander angeordnet und verbleiben sowohl in einer Befüllposition, als auch in einer Entnahmeposition zum Entformen der Formteile jeweils mit konstantem Kavitätsabstand zueinander ortsfest an ihrer jeweiligen Position. Eine Veränderung des Abstands der Kavitäten zueinander ist nicht möglich. Die Kavitätsabstände dieses herkömmlichen Mehrkavitätenwerkzeugs sind durch den Platzbedarf der Schieber definiert.

Die jeweils paarweise einer Kavität zugeordneten Schieber mit Formeinsätzen sind entlang einer gemeinsamen Zahnstangen-Führung, die in Bezug zur Trennebene schräg geneigt angeordnet ist, in entgegengesetzte Richtungen verschiebbar gelagert. Jeweils zwei paarweise angeordnete Schieber, die in der Befüllposition eine gemeinsame Kavität bilden, werden von einem gemeinsamen Antrieb samt Getriebe mittels der Zahnstangen-Führung gleichzeitig in entgegengesetzte Richtungen verfahren. Zur Entnahme der hergestellten Formteile werden die Formeinsätze auseinandergefahren, wobei wie gesagt der Kavitätsabstand zwischen benachbarten Kavitäten konstant bleibt.

In der Befüllposition liegen die zwei Schieber, welche mit ihren Formeinsätzen jeweils einer gemeinsamen Kavität zugeordnet sind, dicht aneinander an und schließen die betreffende Kavität ab. In der Befüllposition sind also zwei benachbarte Schieber bzw. deren Formeinsätze, wobei ein erster Schieber einer ersten Kavität und ein zweiter Schieber einer benachbarten zweiten Kavität zugeordnet ist, voneinander beabstandet.

In der Entnahmeposition zum Entformen der Formteile werden die zwei einer Kavität zugeordneten Schieber jeweils gleichzeitig in gegengleicher Richtung entlang der gemeinsamen Zahnstangen-Führung auseinanderbewegt.

Die Zahnstangen-Führungen von benachbarten Kavitäten sind zueinander V-förmig angeordnet und sind ebenfalls voneinander beabstandet, um in der Entnahmeposition zum Entformen der Formteile den erforderlichen Platzbedarf für das gegengleiche Auseinanderfahren der jeweils einer Kavität zugeordneten Schieber zu gewährleisten, ohne dass sich auseinander gefahrene Schieber zweier benachbarter Kavitäten gegenseitig behindern.

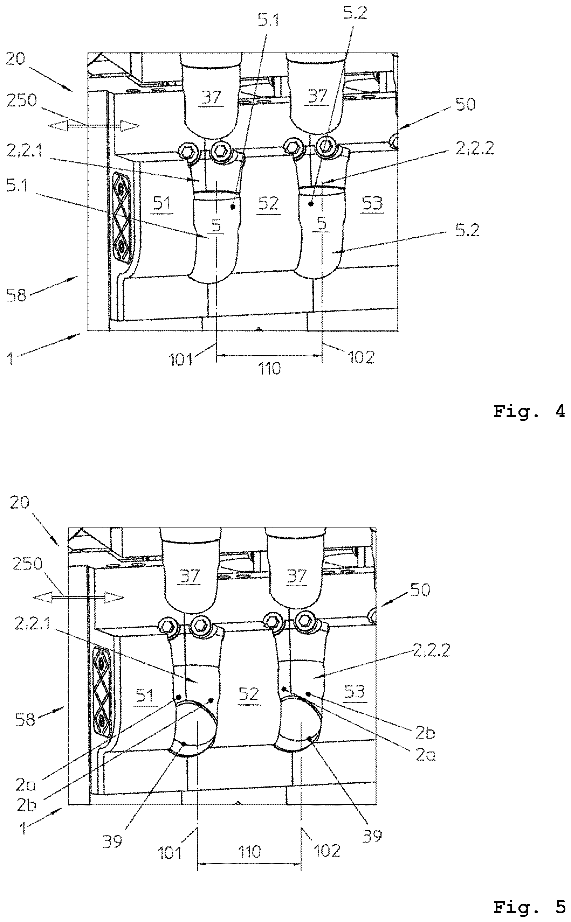

Aus der KR 102 177 891 B1 ist ein Spritzgusswerkzeug bekannt geworden zur Herstellung eines einzelnen Spritzguss-Formteils, beispielsweise eines Ansaugschlauchs und einer Dosierleitung, mit komplexer Geometrie. Wie aus Fig. 5 ersichtlich sind aufgrund der komplexen Formgebung der herzustellenden Formteile zwei Formeinsätze 700a,800a, die ein erstes Formeinsatzpaar auf einer ersten Seite einer Kavität bilden, sowie zwei Formeinsätze 700b,800b, die ein zweites Formeinsatzpaar auf einer der ersten Seite gegenüberliegenden zweiten Seite der Kavität bilden, jeweils paarweise miteinander verbunden. Die jeweils miteinander verbundenen Formeinsatzpaare 700a,800a bzw. 700b,800b umgeben in der Befüllposition an einander gegenüberliegenden Seiten die Kavität eines Formteiles. Die Befüllposition und die Entnahmeposition sind hier jeweils konstant und verbleiben ortsfest.

Die Druckschriften CN 111 251 544 A und CN 111 923 348 A betreffen jeweils herkömmliche Vorrichtungen zur Herstellung von Rohrfittings, wobei mehrere Kavitäten jeweils von einem gemeinsamen Angusskanal aus mit Spritzgussmaterial befüllt werden können.

### AUFGABE DER ERFINDUNG

Es ist Aufgabe der Erfindung, ein neuartiges Spritzgusswerkzeug mit mehreren Kavitäten zur Herstellung von Formteilen aus Kunststoff bereitzustellen, mit dem die aus dem Stand der Technik bekanntgewordenen Nachteile überwunden werden und mit dem es gelingt, bei kompakten Werkzeugabmessungen möglichst viele Kavitäten mit möglichst geringen Kavitätsabständen bzw. mit möglichst kurzen Angusswegen zu realisieren, um mit einem solchen Spritzgusswerkzeug in wirtschaftlicher und effizienter Betriebsweise in einem Produktionszyklus rasch, kostengünstig sowie energiesparend möglichst viele Formteile ohne Wandstärkenanpassungen in gleichbleibender Qualität herstellen zu können.

Weiters ist es eine der Aufgaben der Erfindung, ein Verfahren zur Herstellung von Formteilen mit dem erfindungsgemäßen Spritzgusswerkzeug anzugeben, das eine besonders wirtschaftliche, rasche und effiziente Herstellung von möglichst vielen Formteilen aus Kunststoff pro Produktionszyklus mit gleichbleibender Qualität der Formteile ermöglicht.

### DARSTELLUNG DER ERFINDUNG

Diese Aufgabe wird von einem gattungsgemäßen Spritzgusswerkzeug mit mehreren Kavitäten zur Herstellung von Formteilen insbesondere aus Kunststoff, umfassend eine erste Werkzeugformhälfte und eine entlang einer Formtrennebene trennbare zweite Werkzeugformhälfte, wobei die erste Werkzeugformhälfte und die zweite Werkzeugformhälfte in Bewegungsrichtung relativ zueinander zwischen einer geschlossenen Position, in der die beiden Werkzeugformhälften aneinander anliegen, und einer offenen Position, in der die beiden Werkzeugformhälften voneinander beabstandet sind, beweglich angeordnet sind, wobei die beiden Werkzeugformhälften in der geschlossenen Position die mehreren Kavitäten begrenzen,
dadurch gelöst, dass
die zweite Werkzeugformhälfte zumindest zwei oder mehrere in einer Bewegungsrichtung parallel zur Trennebene verfahrbare Formeinsätze umfasst, wobei jeder der zumindest zwei Formeinsätze zumindest ein Kavitätssegment einer Kavität begrenzt und wobei die zumindest zwei Formeinsätze zwischen einer Befüllposition und einer Entnahmeposition zum Entformen der Formteile verfahrbar sind, wobei in der Befüllposition die Kavitätssegmente von zueinander benachbarten sowie aneinandergrenzenden Formeinsätzen einen ersten Segmentabstand aufweisen, welcher erste Segmentabstand einem Kavitätsabstand zwischen den Symmetrieebenen von zwei zueinander benachbarten Kavitäten entspricht, und wobei in der Entnahmeposition zum Entformen der Formteile die Kavitätssegmente von zueinander benachbarten Formeinsätzen, die in seitlicher Richtung auseinander gefahren sind, einen im Vergleich zum ersten Segmentabstand vergrößerten zweiten Segmentabstand aufweisen.

Mit dem Begriff "Kavitätssegment" wird jener Flächenabschnitt einer Kavität bezeichnet, der von einem verfahrbaren Formeinsatz gebildet ist bzw. von diesem begrenzt ist.

Unter dem Begriff "Segmentabstand" wird der Abstand zweier Kavitätssegmente von zueinander benachbarten beweglichen Formeinsätzen verstanden, und zwar zwischen den Mittelachsen bzw. den Symmetrieebenen der entsprechenden Kavitätssegmente der benachbarten Formeinsätze. In der geschlossenen Position des Spritzgusswerkzeugs mit geschlossenen Werkzeugformhälften entspricht der Segmentabstand somit dem Kavitätsabstand zwischen den Mittelachsen bzw. den Symmetrieebenen von zwei zueinander benachbarten Kavitäten.

Erfindungsgemäß weist die zweite Werkzeugformhälfte zumindest zwei oder mehrere verfahrbare Formeinsätze auf, die parallel zur Trennebene verfahren werden können. In der Befüllposition sind die Kavitätssegmente von zueinander benachbarten Formeinsätzen in einem ersten Segmentabstand angeordnet, wobei zueinander benachbarte Formeinsätze in der Befüllposition aneinandergrenzen. Der erste Segmentabstand in der Befüllposition entspricht also dem Abstand der Mittelachsen bzw. Symmetrieebenen der entsprechenden Kavitätssegmente von benachbarten Formeinsätzen, die aneinandergrenzen.

In der Entnahmeposition zum Entformen bzw. Entnehmen der Formteile aus den Formeinsätzen sind die Kavitätssegmente von zueinander benachbarten Formeinsätzen auseinander gefahren und sind in einem im Vergleich zum ersten Segmentabstand vergrößerten zweiten Segmentabstand voneinander beabstandet. Damit einhergehend ist in der Entnahmeposition auch der Kavitätsabstand zwischen den Mittelachsen bzw. den Symmetrieebenen von zwei zueinander benachbarten Kavitäten vergrößert, um die Entnahme der Formteile zu erleichtern.

Die Bewegungsrichtung, in der im Betrieb des Spritzgusswerkzeugs die Formeinsätze parallel zur Trennebene zwischen der Befüllposition und der Entnahmeposition verfahrbar sind, kann vorzugsweise im Wesentlichen in seitlicher bzw. in horizontaler Richtung sein.

Derartige verfahrbare Formeinsätze ermöglichen eine besonders kompakte Bauweise des Spritzgusswerkzeugs mit kurzen Angusswegen. Durch das Auseinanderfahren der Formeinsätze zum Entformen der hergestellten Formteile können aufwendige zusätzliche Entformungsschieber oder konstruktive Maßnahmen wie Wandstärkenanpassungen der Formteile, die meist erforderlich sind, um die Formteile dem Spritzgusswerkzeug entnehmen zu können, entfallen. Mit einem solchen erfindungsgemäßen Spritzgusswerkzeug gelingt es somit, bei kompakten Werkzeugabmessungen möglichst viele Kavitäten mit möglichst geringen Kavitätsabständen bzw. mit möglichst kurzen Angusswegen zu realisieren, um in wirtschaftlicher und effizienter Betriebsweise in einem Produktionszyklus rasch, kostengünstig sowie energiesparend möglichst viele Formteile ohne Wandstärkenanpassungen in gleichbleibender Qualität herstellen zu können. Je nach Ausführung des Spritzgusswerkzeugs können im Rahmen der Erfindung von einem einzelnen Formeinsatz wahlweise zumindest ein Kavitätssegment, also zumindest ein Abschnitt einer einzigen Kavität gebildet bzw. begrenzt sein oder es können von einem einzelnen Formeinsatz Kavitätssegmente von zwei benachbarten Kavitäten gebildet sein.

Ebenso sind im Rahmen der Erfindung Ausführungen von Spritzgusswerkzeugen denkbar, bei denen beispielsweise auch die erste Werkzeugformhälfte, die sogenannte Düsenseite, verfahrbare Formeinsätze umfassen kann. Weiters können im Rahmen der Erfindung Ausführungen von Spritzgusswerkzeugen beispielsweise so beschaffen sein, dass zumindest zwei, mehrere oder sämtliche der verfahrbaren Formeinsätze nicht nur ein Kavitätssegment, also einen Abschnitt einer Kavität, sondern jeweils die gesamte Kavität eines Formteils bilden bzw. begrenzen. In einem solchen Fall entspricht der Segmentabstand somit dem Kavitätsabstand zwischen den Mittelachsen bzw. den Symmetrieebenen von zwei zueinander benachbarten Kavitäten.

Die hier und im Folgenden verwendeten Positionsangaben von Bauteilen oder Komponenten, wie beispielsweise die Begriffe "oben", "unten", "oberhalb", "unterhalb", "vorne", "hinten", "seitlich", "innerhalb", "außerhalb", "horizontal", "vertikal", "in axialer Richtung", "in radialer Richtung", und dergleichen, im Wesentlichen dem besseren Verständnis der Erfindung, insbesondere in Verbindung mit den nachfolgenden Zeichnungen. Die verwendeten Positionsangaben können sich möglicherweise auf bestimmte Positionen von einzelnen Formteilen oder Formteil-Zwischenprodukten oder von einzelnen Formwerkzeugen, Schiebern oder dergleichen im Betrieb eines erfindungsgemäßen Spritzgusswerkzeugs oder auf einzelnen Ansichten in den Figuren beziehen. In jedem Fall sind solche Positionsangaben dem Fachmann geläufig.

Weitere Vorteile und Effekte der Erfindung sowie vorteilhafte Ausführungsvarianten können den abhängigen Ansprüchen sowie der Beschreibung entnommen werden.

In einer bevorzugten Ausführung der Erfindung kann bei einem Spritzgusswerkzeug jeder Formeinsatz zumindest ein Kavitätssegment je einer Kavität begrenzen.

Vorteilhaft erfolgt bei dieser Ausführungsvariante eine 1:1-Zuordnung, wobei je Kavität ein eigener verfahrbarer Formeinsatz vorgesehen ist. Das Entformen bzw. Entnehmen der hergestellten Formteile aus dem Spritzgusswerkzeug wird dadurch in der Entnahmeposition bei auseinander gefahrenen Formeinsätzen erleichtert.

In einer weiteren bevorzugten Ausführung der Erfindung kann bei einem Spritzgusswerkzeug zumindest ein Formeinsatz zumindest je ein Kavitätssegment zweier oder mehrerer Kavitäten begrenzen.

Diese Ausführungsvariante bietet den Vorteil, dass die Formeinsätze so gestaltet sind, dass die Kavitäten zum Formen von Formteilen zwischen zwei verfahrbaren Formeinsätzen angeordnet sind. Benachbarte Formeinsätze begrenzen - falls diese im Wesentlichen mittig zwischen zwei benachbarten Kavitäten angeordnet sind - zumindest Kavitätssegmente bzw. Kavitätsabschnitte jeweils dieser zwei benachbarten Kavitäten. Diese Ausführung kann Vorteile insbesondere bei komplex geformten Formteilen mit Hinterschneidungen bieten, da möglicherweise keine weiteren Zwischeneinätze zum Formen der Hinterschneidungen der Formteile erforderlich sein können. In zweckmäßiger Weise kann es also bei dieser Ausführungsvariante ausreichend sein, wenn die jeweils zwei benachbarten Formeinsätze jeweils verfahrbare bzw. teilbare Schalenabschnitte bilden, die jeweils Kavitätssegmente der betreffenden Kavität begrenzen.

Um in der Befüllposition die Länge des zumindest einen Angusskanals zu optimieren und möglichst kurze Kanallängen zu ermöglichen, kann es bei einer weiteren Ausführung eines erfindungsgemäßen Spritzgusswerkzeugs vorteilhaft sein, wenn in der Befüllposition die zueinander benachbarten Formeinsätze jeweils zumindest abschnittsweise aneinander anliegen, vorzugsweise flächig aneinander anliegen.

Wenn in der Befüllposition die benachbarten Formeinsätze zumindest abschnittsweise im Wesentlichen spaltfrei aneinander anliegen, so wird in der Befüllposition die Länge des zumindest einen Angusskanals optimiert und es werden möglichst kurze Kanallängen ermöglicht. Weiters werden in dieser Ausführung möglichst geringe Kavitätsabstände zwischen Kavitäten benachbarter Formeinsätze gewährleistet. Je nach Ausführungsform des erfindungsgemäßen Spritzgusswerkzeugs kann es vorgesehen sein, dass optionale Zwischeneinsätze zum Formen von Hinterschneidungen der Formteile zwischen den Formeinsätzen angeordnet sind oder beweglich mit diesen verbunden sind.

In einer weiteren Ausführung der Erfindung kann es insbesondere für die Entformung bzw. Entnahme der hergestellten Formeinsätze vorteilhaft sein, wenn bei einem Spritzgusswerkzeug in der Entnahmeposition die zueinander benachbarten Formeinsätze jeweils, vorzugsweise mit demselben Spaltabstand, voneinander beabstandet sind.

Die Entformung bzw. Entnahme der hergestellten Formteile wird dadurch erleichtert, ohne dass beispielsweise zusätzliche eigene Entformungsschieber oder Wandstärkenanpassungen der Formteile erforderlich sind.

Vorzugsweise kann eine gleichmäßige Aufteilung der Spaltabstände zwischen zueinander benachbarten Formeinsätzen in der Entnahmeposition gleichmäßig aufgeteilte Abstände zur Entnahme der Formteile ermöglichen, wodurch die Entnahme der Formteile aus den auseinander gefahrenen Formeinsätzen weiter erleichtert wird.

In einer Weiterbildung der Erfindung kann bei einem erfindungsgemäßen Spritzgusswerkzeug zumindest ein Innenformkern in zumindest einer Kavität in einer Bewegungsrichtung relativ zur zweiten Werkzeugformhälfte verfahrbar angeordnet sein und zum Herstellen von Innenformabschnitten der Formteile führbar sein.

Abhängig von der Formgebung der mit dem erfindungsgemäßen Spritzgusswerkzeug herzustellenden Formteile kann es erforderlich sein, dass beispielsweise ein oder mehrere Innenformkerne je Kavität jeweils einen entsprechenden Hohlraum im Kunststoff-Formteil ausbilden und während des Spritzvorgangs ermöglichen, dass dieser Hohlraum bzw. diese Hohlräume im Kunststoff-Formteil frei von Kunststoff-Schmelze bleibt bzw. bleiben. Nach Beendigung des Spritzvorgangs wird der jeweilige Innenformkern relativ zum hergestellten Kunststoff-Formteil aus diesem herausgezogen oder herausgeschoben, wodurch der Hohlraum innerhalb des betreffenden Kunststoff-Formteils freigegeben wird.

Je nach Ausführung und relativer Bewegungsrichtung in Bezug zur betreffenden Werkzeugformhälfte, an der solche Innenformkerne bzw. Kerneinsätze angeordnet sind, können derartige Kerneinsätze beispielsweise als Kernzüge, Kernschieber oder als Abstreifhülsen ausgeführt sein. So ist es beispielsweise denkbar, dass für die Herstellung von Formteilen in Gestalt von Kunststoff-Fittings mit 90°-Bögen Innenformkerne vorgesehen sein können, die relativ zur zweiten Werkzeugformhälfte des Spritzgusswerkzeugs nach oben, nach unten oder nach hinten, also in entgegengesetzter Richtung zur ersten Werkzeugformhälfte, verfahren werden können, um die entsprechenden Hohlräume in den hergestellten Formteilen freizugeben. Je nach Gestaltung der Formteile können ein oder mehrere Innenformkerne je Formteil bzw. je Kavität in unterschiedlichsten Winkellagen bzw. Raumrichtungen verfahrbar in Bezug zu einer der Werkzeugformhälften vorgesehen sein.

Eine besonders kompakte Ausführung eines erfindungsgemäßen Spritzgusswerkzeugs kann erhalten werden, wenn die Bewegungsrichtung der verfahrbaren Formeinsätze im Wesentlichen orthogonal orientiert ist zur Bewegungsrichtung eines Innenformkerns, der zum Entformen von Innenformabschnitten der Formteile parallel zur Trennebene führbar ist.

Gemäß dieser Ausführungsvariante der Erfindung ist durch die Festlegung der Bewegungsrichtung der verfahrbaren Formeinsätze sowohl in einer Ebene parallel zur Trennebene, als auch orthogonal zur Bewegungsrichtung eines Innenformkerns, der parallel zur Trennebene und vorzugsweise im Wesentlichen senkrecht nach oben bzw. nach unten führbar ist, die Bewegungsrichtung der Formeinsätze im Raum jeweils im Wesentlichen in horizontaler Richtung festgelegt.

Gemäß einer weiteren Ausführung der Erfindung können bei einem Spritzgusswerkzeug die mehreren Kavitäten zumindest abschnittsweise parallel zueinander angeordnet sein.

Aufgrund der platzsparenden parallelen Anordnung der Kavitäten wird ein kompaktes Spritzgusswerkzeug mit kurzen Angusskanälen ermöglicht.

Eine weitere besonders kompakte Ausführung lässt sich bei einem erfindungsgemäßen Spritzgusswerkzeug erzielen, wenn die zumindest zwei oder mehreren Formeinsätze in einer gemeinsamen Bewegungsrichtung, vorzugsweise entlang einer gemeinsamen Formeinsatzführung, parallel zueinander verfahrbar sind.

Die mehreren Formeinsätze sind dabei parallel zueinander - teleskopartig - verfahrbar bzw. verschiebbar. Vorzugsweise können die Formeinsätze mittels einer gemeinsamen Formeinsatzführung, beispielsweise entlang einer Führungsschiene, teleskopartig verschoben werden.

Um eine besonders kompakte und kostengünstige Ausführung eines Spritzgusswerkzeugs gemäß der Erfindung zu erhalten, kann es vorteilhaft sein, wenn zumindest ein Formeinsatz, vorzugsweise sämtliche Formeinsätze, einteilig gestaltet ist bzw. sind.

In einer Weiterbildung der Erfindung kann es zweckmäßig sein, wenn bei einem Spritzgusswerkzeug zumindest zwei oder mehrere Zwischeneinsätze an der zweiten Werkzeugformhälfte parallel zur Trennebene verfahrbar angeordnet sind, wobei jeder der zumindest zwei Zwischeneinsätze zumindest ein Kavitätssegment einer Kavität eines Formteils begrenzt und in der Befüllposition in Blickrichtung orthogonal zur Trennebene gesehen mittig an zwei benachbarten Formeinsätzen oder seitlich an einem Formeinsatz angeordnet ist. Zwischeneinsätze dienen ebenfalls zum Entformen von Hinterschneidungen der Formteile. Ein solcher Zwischeneinsatz kann in der Befüllposition mittig zwischen zwei Kavitäten benachbarter Formeinsätze oder seitlich einer der Kavitäten angeordnet sein. Je nach Ausführung können die Zwischeneinsätze unabhängig von den Formeinsätzen verfahren werden oder bewegungsmäßig mit den Formeinsätzen gekoppelt sein. Die Blickrichtung "orthogonal zur Trennebene" entspricht der Bewegungsrichtung der verfahrbaren Werkzeugformhälften.

In einer ersten Ausführungsvariante können Kavitätsbereiche mit Hinterschneidungen von den Zwischeneinsätzen begrenzt bzw. von diesen gebildet sein. In diesem Fall verbleiben die hergestellten Formteile bis zu ihrer Entnahme beispielsweise mit Hilfe eines Entnahmeroboters zumindest mit jenen Außenkonturabschnitten ohne Hinterschneidungen in den beweglich verfahrbaren Formeinsätzen.

In einer zweiten Ausführungsvariante befinden sich Kavitätsbereiche mit Hinterschneidungen in den beweglichen Formeinsätzen werden durch diese begrenzt. Die hergestellten Formteile verbleiben in diesem Fall mit Ihrer Innenkontur auf den Innenformkernen, welche zum Entformen verschoben werden müssen. Die hergestellten Formteile können beispielsweise mit Abstreifhülsen, die verschiebbar rings um die entsprechenden Innenformkerne gelagert sein können, von den Innenformkernen abgestreift werden. Die Zuhilfenahme eines Entnahmeroboters ist bei dieser Ausführung nicht zwingend erforderlich.

Zum Formen von Hinterschneidungen der Formteile kann es zweckmäßig sein, wenn bei einem erfindungsgemäßen Spritzgusswerkzeug zumindest ein Formeinsatz, vorzugsweise sämtliche Formeinsätze, mehrteilig gestaltet ist bzw. sind und der zumindest eine Formeinsatz zumindest einen Zwischeneinsatz umfasst, welcher Zwischeneinsatz in der Befüllposition in Blickrichtung orthogonal zur Trennebene gesehen mittig zwischen zwei Kavitätssegmenten benachbarter Formeinsätze oder seitlich eines der Kavitätssegmente angeordnet ist.

Bei dieser Ausführung können die Zwischeneinsätze Teil jeweils eines Formeinsatzes sein.

In einer Weiterbildung der Erfindung kann es vorteilhaft sein, wenn bei einem Spritzgusswerkzeug der zumindest eine Zwischeneinsatz mit dem zumindest einen Formeinsatz bewegungsmäßig gekoppelt ist.

Je nach Ausführung kann beispielsweise zumindest ein Zwischeneinsatz mittels eines Anschlagwinkels oder einem vergleichbaren Koppelungsmittels mit zumindest einem Formeinsatz gekoppelt sein und beim Verschieben bzw. Verfahren des Formeinsatzes mit diesem mitgezogen werden. Vorteilhaft können damit mehrere Formeinsätze samt den damit bewegungsmäßig gekoppelten Zwischeneinsätzen mit einem gemeinsamen Antrieb zwischen der Befüllposition und der jeweiligen Entnahmeposition verfahren werden.

Besonders vorteilhaft kann es dabei sein, wenn bei einem erfindungsgemäßen Spritzgusswerkzeug die Bewegungsrichtung der Zwischeneinsätze parallel zur Bewegungsrichtung der Formeinsätze orientiert ist.

Die Zwischeneinsätze können in diesem Fall gemeinsam mit den Formeinsätzen geführt bzw. verschoben werden, was den Aufbau und Betrieb des Spritzgusswerkzeugs erleichtert. So können gemeinsame Führungseinrichtungen wie beispielsweise Führungsschienen sowie gemeinsame Antriebe, beispielsweise Stellantriebe, zum Verfahren sowohl der Zwischeneinsätze, als auch der Formeinsätze dienen.

In einer besonders kompakten Ausführung können bei einem Spritzgusswerkzeug gemäß der Erfindung die mehreren Kavitäten mit einem gemeinsamen Angusskanal, vorzugsweise sämtliche Kavitäten mit einem einzigen Angusskanal, verbunden sein.

Die mehreren Kavitäten können in dieser Ausführungsvariante von einem gemeinsamen Angusskanal aus mit Kunststoffschmelze befüllt werden. Durch die veränderbaren Segmentabstände entsprechend den Kavitätsabständen zwischen benachbarten Kavitäten können in geschlossener Position der Formeinsätze die Weglängen des Angusskanals minimiert werden. Zur Entnahme der hergestellten Formteile werden die Formeinsätze auseinandergefahren. Besonders vorteilhaft kann es sein, wenn ein einziger, zentraler Angusskanal zum Befüllen von sämtlichen Kavitäten mit Kunststoffschmelze dient.

Im Fall eines Spritzgusswerkzeugs mit Heißkanal kann der Angusskanal auch zwei- oder mehrteilig ausgeführt sein. Die Verteilung der Kunststoffschmelze zu den einzelnen Angusskanälen kann in diesem Fall vom beheiztem Heißkanal aus erfolgen.

Im Rahmen der Erfindung ist es außerdem möglich, ein Spritzgusswerkzeug bereit zu stellen, bei dem ein sogenannter Kaltkanal bzw. gekühlter Angusskanal oder mehrere solche gekühlten Angusskanäle nicht erforderlich ist bzw. sind, sondern das Spritzgussmaterial direkt von einem oder von mehreren Heißkanälen aus mittels Heißkanaldüsen in die jeweiligen Kavitäten des Spritzgusswerkzeugs eingespritzt wird. In einem solchen Ausführungsfall sind die Angusswege für die Zufuhr des Spritzgussmaterials besonders kurz und das Spritzgusswerkzeug kann in besonders kompakter Bauweise mit vergleichsweise kurzen Werkzeugabmessungen bereitgestellt werden.

Die eingangs genannte Aufgabe, nämlich ein Verfahren zur Herstellung von Formteilen anzugeben, das eine besonders wirtschaftliche, rasche und effiziente Herstellung von möglichst vielen Formteilen aus Kunststoff pro Produktionszyklus mit gleichbleibender Qualität der Formteile ermöglicht, wird erfindungsgemäß von einem Verfahren zur Herstellung von Formteilen insbesondere aus Kunststoff gelöst, das die folgenden Schritte umfasst:
- Bereitstellen eines Spritzgusswerkzeugs mit mehreren Kavitäten, umfassend eine erste Werkzeugformhälfte und eine entlang einer Formtrennebene trennbare zweite Werkzeugformhälfte, wobei in einer geschlossenen Position des Spritzgusswerkzeugs beide Werkzeugformhälften aneinander anliegen und die mehreren Kavitäten begrenzen;
- Spritzgießen von Formteilen in den Kavitäten;
- Verfahren des Spritzgusswerkzeugs in eine offene Position mit voneinander beabstandeten Werkzeugformhälften;
- Freigeben der Kavitäten, wobei zum Entformen der Formteile Kavitätssegmente, die an einer Werkzeugformhälfte angeordnet sind, aus einer Befüllposition in einer Bewegungsrichtung parallel zur Trennebene in eine Entnahmeposition verfahren werden, wobei in der Befüllposition zueinander benachbarte sowie aneinandergrenzende Kavitätssegmente einen ersten Segmentabstand aufweisen, welcher erste Segmentabstand einem Kavitätsabstand zwischen den Symmetrieebenen von zwei zueinander benachbarten Kavitäten entspricht, und wobei in der Entnahmeposition zum Entformen der Formteile die Kavitätssegmente von zueinander benachbarten Formeinsätzen, die in seitlicher Richtung auseinander gefahren sind, einen im Vergleich zum ersten Segmentabstand vergrößerten zweiten Segmentabstand aufweisen.

Die vorhin im Zusammenhang mit einem erfindungsgemäßen Spritzgusswerkzeug genannten Vorteile und vorteilhaften Effekte gelten sinngemäß ebenso für das erfindungsgemäße Verfahren zur Herstellung von Formteilen. In besonders zweckmäßiger Weise kann zur Durchführung des Verfahrens ein erfindungsgemäßes Spritzgusswerkzeug eingesetzt werden.

### KURZE BESCHREIBUNG DER FIGUREN

Die Erfindung wird nun anhand von Ausführungsbeispielen näher erläutert. Die schematischen Zeichnungen sind beispielhaft und sollen den Erfindungsgedanken darlegen.

Es zeigen:
- **Fig. 1**: in einer isometrischen Ansicht schräg von der Seite eine erste Ausführung eines erfindungsgemäßen Spritzgusswerkzeugs in einer geschlossenen Position;
- **Fig. 2**: in einer isometrischen Ansicht schräg von der Seite das in Fig. 1 dargestellte Spritzgusswerkzeug in einer geöffneten Position;
- **Fig. 3**: in einer Frontalansicht eine bewegliche Werkzeugformhälfte des in Fig. 2 gezeigten geöffneten Spritzgusswerkzeugs;
- **Fig. 4**: in einer isometrischen Ansicht schräg von vorne ein Detail einer zweiten Ausführung eines erfindungsgemäßen Spritzgusswerkzeugs mit verfahrbaren Formeinsätzen ohne Zwischeneinsätze in einer Befüllposition, in der benachbarte Formeinsätze aneinander anliegen, samt den darin befindlichen Formteilen aus Kunststoff;
- **Fig. 5**: die in Fig. 4 dargestellte Anordnung ohne Formteile aus Kunststoff;
- **Fig. 6**: eine zu Fig. 4 vergleichbare Anordnung mit verfahrbaren Formeinsätzen in einer Entnahmeposition, in der benachbarte Formeinsätze voneinander beabstandet sind, samt den darin befindlichen Formteilen aus Kunststoff;
- **Fig. 7**: die in Fig. 6 dargestellte Anordnung ohne Formteile aus Kunststoff;
- **Fig. 8**: in einer isometrischen Ansicht schräg von vorne ein Detail der ersten Ausführung eines erfindungsgemäßen Spritzgusswerkzeugs mit verfahrbaren Formeinsätzen sowie mit verfahrbaren Zwischeneinsätzen in einer Befüllposition, in der benachbarte Formeinsätze aneinander anliegen, samt den darin befindlichen Formteilen aus Kunststoff;
- **Fig. 9**: die in Fig. 8 dargestellte Anordnung ohne Formteile aus Kunststoff;
- **Fig. 10**: eine zu Fig. 8 vergleichbare Anordnung mit verfahrbaren Formeinsätzen sowie mit verfahrbaren Zwischeneinsätzen in einer Entnahmeposition, in der benachbarte Formeinsätze voneinander beabstandet sind, samt den darin befindlichen Formteilen aus Kunststoff;
- **Fig. 11**: die in Fig. 10 dargestellte Anordnung ohne Formteile aus Kunststoff;
- **Fig. 12**: in einer isometrischen Ansicht schräg von der Seite das in Fig. 2 dargestellte, geöffnete Spritzgusswerkzeug während des Entformens von Innenformkernen;
- **Fig. 13**: eine Frontalansicht von vorne auf die erste Werkzeugformhälfte der in Fig. 12 dargestellten Anordnung;
- **Fig. 14**: eine Schnittansicht gemäß der in Fig. 13 eingezeichneten Schnittebene A-A während des Entformens der Innenformkerne;
- **Fig. 15**: eine zu Fig. 12 vergleichbare Anordnung des erfindungsgemäßen Spritzgusswerkzeugs während des Entnehmens bzw. Entfernens von Spritzgussresten aus dem Angusskanal;
- **Fig. 16**: in einer isometrischen Ansicht schräg von der Seite das in Fig. 2 dargestellte, geöffnete Spritzgusswerkzeug mit verschobenen Formeinsätzen sowie mit verfahrbaren Zwischeneinsätzen in einer Entnahmeposition, in der benachbarte Formeinsätze voneinander beabstandet sind, samt den darin befindlichen Formteilen aus Kunststoff;
- **Fig. 17**: eine Frontalansicht von vorne auf die zweite Werkzeugformhälfte der in Fig. 16 dargestellten Anordnung;
- **Fig. 18**: in einer isometrischen Ansicht schräg von der Seite das in Fig. 16 dargestellte, geöffnete Spritzgusswerkzeug während der Entnahme der Formteile;
- **Fig. 19**: in einer isometrischen Ansicht schräg von der Seite ein erster herkömmlicher Formteil aus Kunststoff;
- **Fig. 20**: in einer isometrischen Ansicht schräg von der Seite ein zweiter herkömmlicher Formteil aus Kunststoff;
- **Fig. 21**: in einer Frontalansicht die bewegliche Werkzeugformhälfte des in Fig. 2 gezeigten geöffneten erfindungsgemäßen Spritzgusswerkzeugs mit acht Kavitäten;
- **Fig. 22**: in einer Frontalansicht die bewegliche Werkzeugformhälfte eines herkömmlichen Spritzgusswerkzeugs mit vier Kavitäten;
- **Fig. 23**: in einer Frontalansicht die bewegliche Werkzeugformhälfte einer dritten Ausführung eines geöffneten erfindungsgemäßen Spritzgusswerkzeugs mit sechszehn Kavitäten;
- **Fig. 24**: in einer Frontalansicht die bewegliche Werkzeugformhälfte eines herkömmlichen Spritzgusswerkzeugs mit sechszehn Kavitäten;
- **Fig. 25** bis **Fig. 28**: in isometrischen Ansichten schräg von der Seite jeweils unterschiedliche Betriebszustände des in Fig. 24 dargestellten herkömmlichen Spritzgusswerkzeugs.

### WEGE ZUR AUSFÜHRUNG DER ERFINDUNG

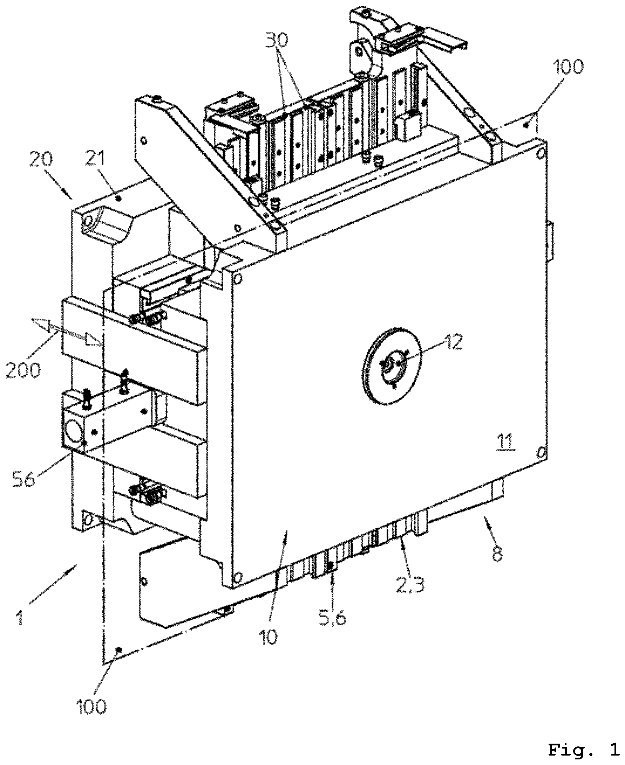

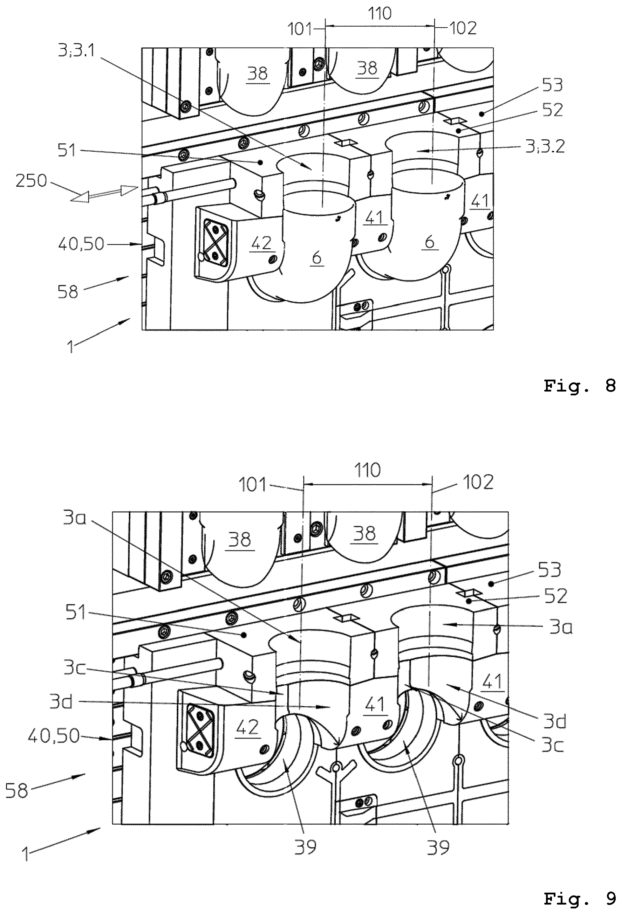

Die **Figuren 1 bis 3** sowie die Detailansichten der **Figuren 8 bis 11** betreffen jeweils eine erste Ausführungsform eines erfindungsgemäßen Spritzgusswerkzeugs 1. Die folgende Figurenbeschreibung betrifft gleichermaßen die Figuren 1 bis 3 sowie die Figuren 8 bis 11. Das erfindungsgemäße Spritzgusswerkzeug 1 weist mehrere Kavitäten 2,3 zur Herstellung von Formteilen 5,6 insbesondere aus Kunststoff auf. Das Spritzgusswerkzeug 1 umfasst eine erste Werkzeugformhälfte 10, die hier starr gelagert ist und als Düsenseite bezeichnet wird, sowie eine entlang einer Formtrennebene 100 trennbare zweite Werkzeugformhälfte 20, welche hier beweglich gelagert ist und als Auswerferseite des Spritzgusswerkzeugs 1 bezeichnet wird.

Die erste Werkzeugformhälfte 10 und die zweite Werkzeugformhälfte 20 sind in Bewegungsrichtung 200, welche in Fig. 1 als Doppelpfeil 200 symbolisiert ist, relativ zueinander zwischen einer geschlossenen Position 8, in der die beiden Werkzeugformhälften 10,20 aneinander anliegen, und einer offenen Position 9, in der die beiden Werkzeugformhälften 10,20 voneinander beabstandet sind, beweglich verfahrbar.

**Fig. 1** zeigt die geschlossene Position 8 der beiden Werkzeugformhälften 10,20. Die beiden Werkzeugformhälften 10,20 begrenzen in der geschlossenen Position 8 die mehreren Kavitäten 2,3.

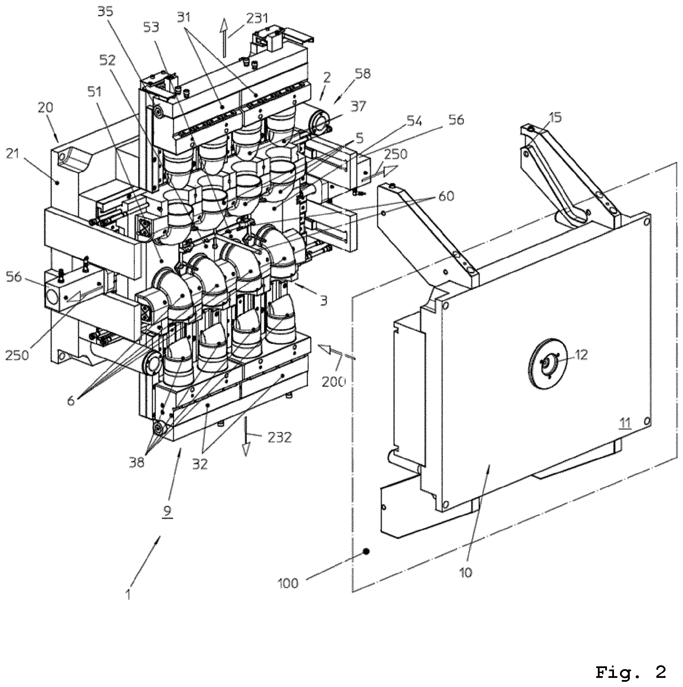

Die geöffnete Position 9 der beiden Werkzeugformhälften 10,20 ist in **Fig. 2** gezeigt.

Die erste Werkzeugformhälfte 10, die sogenannte Düsenseite ist hier die starre Werkzeugformhälfte, die auf einer ersten, starren Grundplatte 11 montiert ist und die einer nicht dargestellten Spritzeinheit einer Spritzgussvorrichtung zugewandt ist. Die Grundplatte 11 weist dazu eine Angussbuchse 12 auf, die während des Spritzgießens von Formteilen 5,6 aus Kunststoff mit der Spritzeinheit zum Zuführen von Kunststoffschmelze gekoppelt ist.

Die zweite Werkzeugformhälfte 20, die sogenannte Auswerferseite, ist hier auf einer zweiten, beweglichen Grundplatte 21 montiert und bildet die bewegliche Werkzeugformhälfte. Um in einem nächsten Produktionszyklus mit dem Spritzgusswerkzeug mehrere Formteile 5,6 herstellen zu können, müssen die beiden Werkzeugformhälften 10,20 zusammengeschoben werden und sich in der geschlossenen Position 8 befinden. Man spricht hier vom Zufahren der Werkzeugformhälften 10,20, wie dies in Fig. 1 gezeigt ist. Nach erfolgtem Spritzguss und Erstarren der spritzgegossenen Formteile 5,6 werden die beiden Werkzeugformhälften 10,20 in die geöffnete Position 9 auseinandergefahren, wie dies in Fig. 2 gezeigt ist.

Die Formteile aus Kunststoff 5,6 verbleiben in der geöffneten Position 9 in den Kavitäten auf der Auswerferseite bzw. der zweiten Werkzeugformhälfte 20. An der Auswerferseite sind hier Anschlüsse für sogenannte Kerneinsätze angeordnet, die beispielsweise als Kernschieber mit entsprechenden Kernschieberführungen 30 ausgeführt sind.

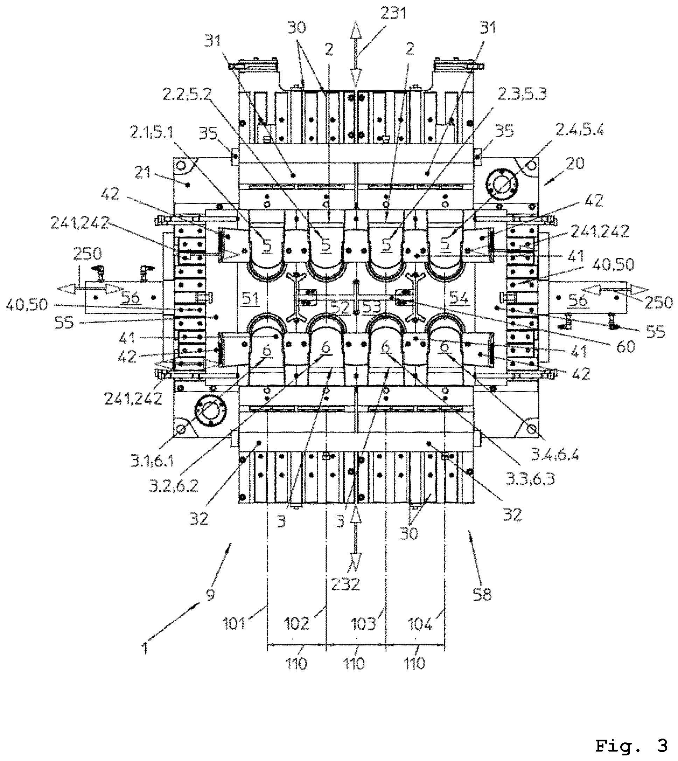

Wie in **Fig. 3** ersichtlich umfasst beim erfindungsgemäßen Spritzgusswerkzeug 1, das insgesamt acht Kavitäten 2,3 zur gleichzeitigen Herstellung von acht Formteilen 5,6 pro Produktionszyklus aufweist, die zweite Werkzeugformhälfte 20 beispielsweise vier verfahrbare Formeinsätze 51,52,53,54. Die vier verfahrbaren Formeinsätze 51,52,53,54 sind hier in einer Bewegungsrichtung 250, die als Pfeil bzw. als Doppelpfeil 250 symbolisiert ist, parallel zur Trennebene 100 verfahrbar. Wie in Fig. 3 ersichtlich, ist die Bewegungsrichtung 250 der mehreren verfahrbaren bzw. verschiebbaren Formeinsätze 51,52,53,54 hier im Wesentlich horizontal. Die Formeinsätze 51,52,53,54 weisen eine gemeinsame Formeinsatzführung 50 auf, wobei an einander gegenüberliegenden Außenseiten jeweils ein Formeinsatzschieber 55, der mit einem eigenen Antrieb 56 versehen ist, die Formeinsätze 51,52,53,54 in Bewegungsrichtung 250 verfährt. Der in Fig. 3 im Bild links gezeigte Formeinsatzantrieb 56, der mit dem linken Formeinsatzschieber 55 gekoppelt ist und diesen antreibt, dient zum Verfahren der beiden Formeinsätze 51,52 in linker Richtung nach außen. Der in Fig. 3 im Bild rechts gezeigte Formeinsatzantrieb 56, der mit dem rechten Formeinsatzschieber 55 gekoppelt ist und diesen antreibt, dient zum Verfahren der beiden Formeinsätze 53,54 in umgekehrter Richtung rechts nach außen.

Jeder der vier Formeinsätze 51,52,53,54 begrenzt hier zumindest ein Kavitätssegment 2a,2b,3a,3b einer Kavität 2,3, wie dies beispielsweise den Detailansichten der Figuren 4 bis 7 sowie den Figuren 8 bis 11 zu entnehmen ist. In den Figuren werden jene Kavitätssegmente einer der Kavitäten 2, welche von einem der Formeinsätze 51,52,53,54 begrenzt sind, mit den Bezugszeichen 2a oder 2b bezeichnet. Jene Kavitätssegmente einer der Kavitäten 2, die von einem Zwischeneinsatz 41,42 begrenzt sind, werden mit den Bezugszeichen 2c oder 2d bezeichnet. Entsprechend werden jene Kavitätssegmente einer der Kavitäten 3, welche von einem der Formeinsätze 51,52,53,54 begrenzt sind, mit den Bezugszeichen 3a oder 3b bezeichnet. Jene Kavitätssegmente einer der Kavitäten 3, die von einem Zwischeneinsatz 41,42 begrenzt sind, werden mit den Bezugszeichen 3c oder 3d bezeichnet.

Die Formeinsätze 51,52,53,54 sind zwischen einer Befüllposition 58, die in den Figuren 2 und 3 sowie in den Detailansichten der Figuren 8 und 9 gezeigt ist, und einer Entnahmeposition 59 zum Entformen der Formteile 5,6 verfahrbar.

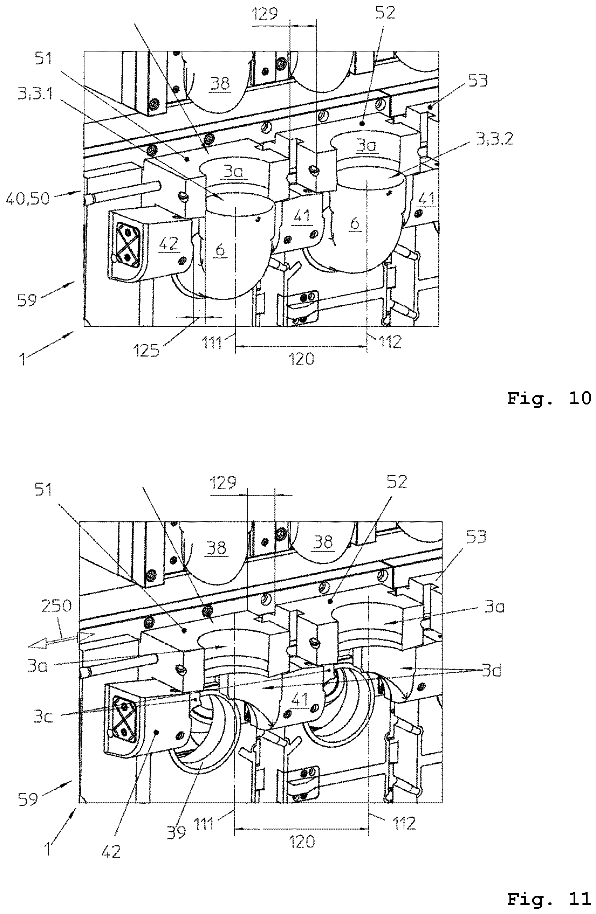

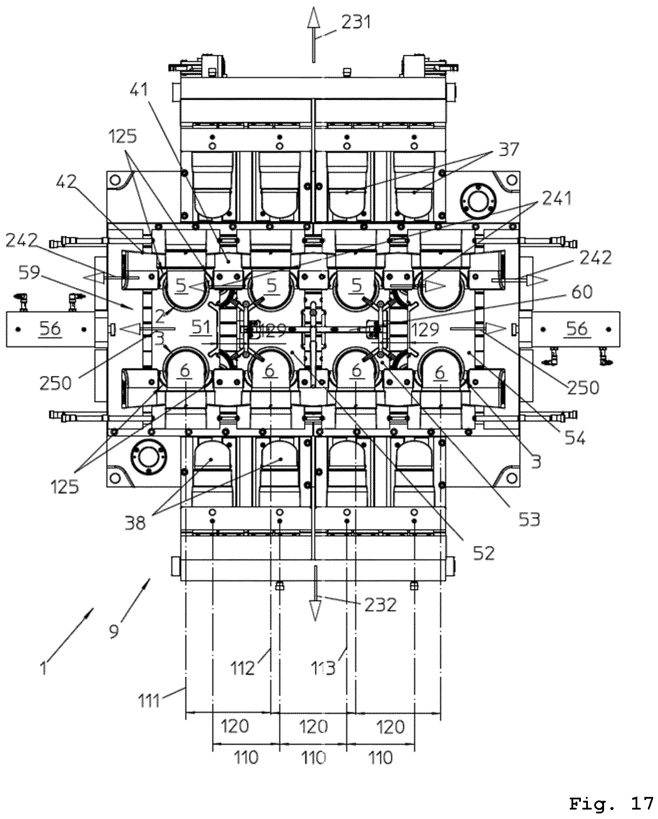

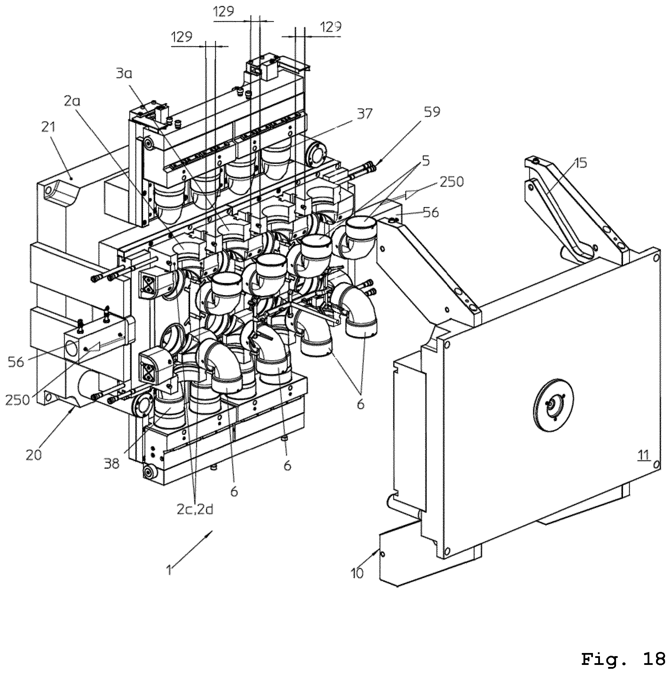

In der Befüllposition 58 bzw. Spritzposition 58, die streng genommen während des Spritzgießens bei geschlossener Position 8 des Spritzgusswerkzeugs 8 auftritt und in der die Kavitäten 2,3 geschlossen sind, weisen die Kavitätssegmente 2a,2b,3a,3b von zueinander jeweils benachbarten Formeinsätzen 51,52; 52,53; 53,54 einen ersten Segmentabstand 110 auf. Die Entnahmeposition 59, in der zueinander benachbarte Formeinsätze 51,52,53,54 voneinander beabstandet sind, ist in den Figuren 17 und 18 sowie in den Detailansichten der Figuren 10 und 11 veranschaulicht. In der Entnahmeposition 59 weisen die Kavitätssegmente 2a,2b,3a,3b von zueinander benachbarten Formeinsätzen 51,52; 52,53; 53,54 einen im Vergleich zum ersten Segmentabstand 110 vergrößerten zweiten Segmentabstand 120 auf.

Zurückkommend zu Fig. 3 sind hier die jeweiligen Positionen der Kavitäten 2,3 bzw. der in den geschlossenen Kavitäten 2,3 in geschlossener Position 8 des Spritzgusswerkzeugs 1 hergestellten Formteile 5,6 angegeben.

Die vier oberen Kavitäten 2 befinden sich demnach in Fig. 3 von links nach rechts gesehen an einer ersten Position 2.1, einer zweiten Position 2.2, einer dritten Position 2.3 sowie einer vierten Position 2.4. Die in diesen Kavitäten 2 in geschlossener Position 8 des Spritzgusswerkzeugs 1 hergestellten Formteile 5, die hier beispielsweise Fittings sind, befinden sich dementsprechend von links nach rechts gesehen an einer ersten Position 5.1, einer zweiten Position 5.2, einer dritten Position 5.3 sowie einer vierten Position 5.4.

Die vier unteren Kavitäten 3 befinden sich in Fig. 3 von links nach rechts an einer ersten Position 3.1, einer zweiten Position 3.2, einer dritten Position 3.3 sowie einer vierten Position 3.4. Die in diesen Kavitäten 3 in geschlossener Position 8 des Spritzgusswerkzeugs 1 hergestellten Formteile 6, die hier beispielsweise den Formteilen 5 entsprechen und ebenfalls Fittings sind, befinden sich dementsprechend von links nach rechts gesehen an einer ersten Position 6.1, einer zweiten Position 6.2, einer dritten Position 6.3 sowie einer vierten Position 6.4.

Die Kavitätsabschnitte der Kavitäten 2,3, die an der zweiten, beweglichen Werkzeugformhälfte 20 angeordnet sind, sind hier noch mit den hergestellten Formteilen 5,6 befüllt. In der in Fig. 3 gezeigten Lage in der Befüllposition 58 mit nebeneinander bzw. aneinander anliegenden Formeinsätzen 51,52,53,54 befinden sich die jeweils ersten Positionen 2.1 und 3.1 der oberen Kavität 2 und der unteren Kavität 3 im Wesentlichen in senkrechter Richtung untereinander und bilden eine erste Symmetrieebene 101. Die jeweils zweiten Positionen 2.2 und 3.2 der Kavitäten 2,3 befinden sich untereinander entlang einer zweiten Symmetrieebene 102, die dritten Positionen 2.3 und 3.3 befinden entlang einer dritten Symmetrieebene 103 und die jeweiligen vierten Positionen 2.4 und 3.4 befinden entlang einer vierten Symmetrieebene 104. Der Abstand zwischen benachbarten Symmetrieebenen 101,102,103, 104 in der gezeigten Befüllposition 58 entspricht dem ersten Segmentabstand 110.

In Fig. 2 sind an der ersten, starren Werkzeugformhälfte 10 an den schräg nach oben abstehenden Fortsätzen Kulissenführungen 15 angeordnet, die zur Aufnahme von Führungsmittel 35, hier beispielsweise von Führungsrollen 35, dienen, die seitlich an einem beweglich gelagerten Schiebereinsatz 31 an der zweiten, beweglichen Werkzeugformhälfte 20 angeordnet sind. Beim Öffnen 9 der beiden Werkzeugformhälften 10,20 nach dem Spritzgießen der Formteile 5,6 in den Kavitäten 2,3 in geschlossener Position 8 verfährt die bewegliche Werkzeugformhälfte 20 in Pfeilrichtung 200 von der starren Werkzeugformhälfte 10 weg. Die Kulissenführungen 15 bewirken, dass beim Auseinanderfahren der beiden Werkzeugformhälften 10,20 der in Fig. 2 gezeigte, obere Schiebereinsatz 31 bzw. Kerneinsatz 31 in Pfeilrichtung 231 in Bezug zur Werkzeugformhälfte 20 relativ nach oben verfahren wird und die damit verbundenen oberen Innenformkerne 37 mit dem oberen Kerneinsatz 31 gemeinsam nach oben aus den Formteilen 5 herausgefahren bzw. herausgezogen werden.

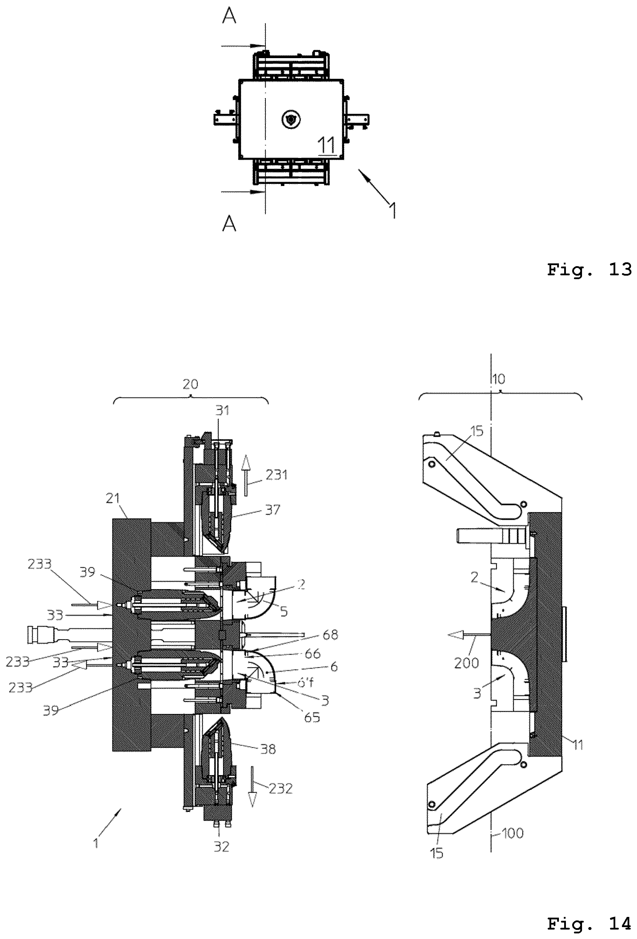

Weitere Kulissenführungen, die umgekehrt an schräg nach unten abstehenden Auslegern an der starren ersten Werkzeugformhälfte 10 angeordnet sind und ebenfalls mit Führungsrollen 35 mit einem unteren Schiebereinsatz 32 bzw. Kerneinsatz 32 bewegungsmäßig gekoppelt sind, bewirken, dass beim Auseinanderfahren der beiden Werkzeugformhälften 10,20 gleichzeitig der in Fig. 2 gezeigte, untere Schiebereinsatz 32 bzw. Kerneinsatz 32 in Pfeilrichtung 232 in Bezug zur Werkzeugformhälfte 20 relativ nach unten verfährt und die damit verbundenen unteren Innenformkerne 38 mit dem unteren Kerneinsatz 32 gemeinsam nach unten aus den Formteilen 6 herausgefahren bzw. herausgezogen werden. Weitere, hintere Kernschieber bzw. Kerneinsätze für weitere, hintere Innenformkerne befinden sich an der Rückseite der zweiten Grundplatte 21 und sind in Fig. 2 nicht zu sehen. Es wird dazu auf die nachfolgenden Figuren 13 und 14 verwiesen.

Wie in Fig. 3 ersichtlich sind an der zweiten Werkzeugformhälfte 20 mehrere Zwischeneinsätze 41,42 parallel zur Trennebene 100 verfahrbar angeordnet. Jeder der Zwischeneinsätze 41,42 begrenzt zumindest ein Kavitätssegment 2c,2d,3c,3d einer Kavität 2,3 eines Formteils 5,6 begrenzt und ist in der Befüllposition 58 in Blickrichtung orthogonal zur Trennebene 100 gesehen mittig an zwei benachbarten Formeinsätzen 51,52; 52,53; 53,54 oder seitlich an einem Formeinsatz 51,52,53,54 angeordnet. Die mittig an zwei benachbarten Formeinsätzen angeordneten Zwischeneinsätze sind mit dem Bezugszeichen 41 versehen. Die seitlich außenliegenden Zwischeneinsätze sind mit dem Bezugszeichen 42 versehen.

Die hier gezeigten Formeinsätze 51,52,53,54 sind beispielsweise jeweils mehrteilig gestaltet, wobei jeder Formeinsatz 51,52,53,54 zumindest einen Zwischeneinsatz 41,42 umfasst, wobei die Zwischeneinsätze 41 in der Befüllposition 58 in Blickrichtung orthogonal zur Trennebene 100 gesehen mittig zwischen zwei Kavitätssegmenten 2a,2b,3a,3b benachbarter Formeinsätze 51,52; 52,53; 53,54 angeordnet sind und die Zwischeneinsätze 42 seitlich eines der Kavitätssegmente 2a,2b,3a,3b angeordnet sind.

Die Zwischeneinsätze 41,42 sind mit den Formeinsätzen 51,52,53,54 bewegungsmäßig gekoppelt. Eine Bewegungsrichtung 241,242 der Zwischeneinsätze 41,42, die in Fig. 3 durch Doppelpfeile 241,242 symbolisiert ist, ist parallel zur Bewegungsrichtung 250 der Formeinsätze 51,52,53,54 orientiert. Die Formeinsatzführungen 50 bilden auch entsprechende Zwischeneinsatzführungen 40. Eigene Zwischeneinsatzführungen 40 zum Verfahren der Zwischeneinsätze 41,42 sind nicht erforderlich.

Bei der in den Figuren 1 bis 3 sowie in den Detailansichten der Figuren 8 bis 11 gezeigten ersten Ausführung des erfindungsgemäßen Spritzgusswerkzeugs 1 begrenzt jeder Formeinsatz 51,52,53,54 jeweils ein Kavitätssegment 2a einer ersten bzw. oberen Kavität 2 bzw. ein Kavitätssegment 3a einer zweiten Kavität. Die beiden oberen seitlichen Zwischeneinsätze 42 begrenzen jeweils ein Kavitätssegment 2c der äußeren ersten Position 2.1 der oberen Kavität 2 sowie ein Kavitätssegment 2d der äußeren vierten Position 2.4 der oberen Kavität 2. Die beiden unteren seitlichen Zwischeneinsätze 42 begrenzen jeweils ein Kavitätssegment 3c der äußeren ersten Position 3.1 der unteren Kavität 3 sowie ein Kavitätssegment 3d der äußeren vierten Position 3.4 der unteren Kavität 3. Die in Fig. 3 jeweils mittig zwischen zwei Formeinsätzen 51,52,53,54 angeordneten oberen Zwischeneinsätze 41 begrenzen jeweils Kavitätssegmente 2c,2d zweier benachbarter oberer bzw. erster Kavitäten 2. Die unteren Zwischeneinsätze 41 begrenzen jeweils Kavitätssegmente 3c,3d zweier benachbarter unterer bzw. zweiter Kavitäten 3.

**Fig. 8** zeigt ein Detail der Figuren 2 und 3, wobei sich hier die Formteile 6 noch in den Kavitäten 3 bzw. 3.1 sowie 3.2 befinden. In der Befüllposition 58 grenzen die zueinander benachbarten Formeinsätze 51,52 aneinander.

**Fig. 9** zeigt dieselbe Anordnung entsprechend Fig. 8, jedoch zur besseren Übersicht ohne Formteile 6. Der Formteil 6 in der ersten Position 3.1 der unteren Kavität 3 wird vom Kavitätssegment 3a des ersten verfahrbaren Formeinsatzes 51 sowie vom Kavitätssegment 3c des seitlichen Zwischeneinsatz 42 und gegenüberliegend vom Kavitätssegment 3d des mittleren Zwischeneinsatzes 41 begrenzt.

Der erste Segmentabstand 110 ist der Abstand zweier Kavitätssegmente 3a von zueinander benachbarten beweglichen Formeinsätzen 51,52, und zwar zwischen den Mittelachsen bzw. den Symmetrieebenen 101,102 der entsprechenden Kavitätssegmente der benachbarten Formeinsätze 51,52. In der geschlossenen Position des Spritzgusswerkzeugs 1 mit geschlossenen Werkzeugformhälften 10,20 entspricht der erste Segmentabstand 110 somit dem Kavitätsabstand zwischen den Mittelachsen bzw. den Symmetrieebenen von zwei zueinander benachbarten Kavitäten 2 bzw. 3.

**Fig. 10** zeigt die in Fig. 8 im Detail gezeigte Anordnung mit verfahrbaren Formeinsätzen 51,52,53 sowie mit verfahrbaren Zwischeneinsätzen 41,42 in einer Entnahmeposition 59, in der benachbarte Formeinsätze 51,52 in Bewegungsrichtung 250 auseinandergefahren und voneinander beabstandet sind, samt den darin befindlichen Formteilen 6 aus Kunststoff. Wie beispielsweise an der Position 3.1 der Kavität 3 erkennbar befindet sich der betreffende Formteil 6 noch innerhalb der Halterung des vom ersten Formeinsatz 51 begrenzten Kavitätssegments 3a. Die Zwischeneinsätze 41,42 sind jedoch bereits in seitlicher Bewegungsrichtung 241,242, welche hier der Bewegungsrichtung 250 entspricht, vom Formteil 6 um einen Spaltabstand 125 beabstandet auseinandergefahren.

**Fig. 11** zeigt die in Fig. 10 dargestellte Anordnung ohne Formteile aus Kunststoff. Der zweite Segmentabstand 120 ist der Abstand zweier Kavitätssegmente 3a von zueinander benachbarten beweglichen Formeinsätzen 51,52, und zwar zwischen den Mittelachsen bzw. den Symmetrieebenen 111,112 der entsprechenden Kavitätssegmente 3a der benachbarten Formeinsätze 51,52 in der Entnahmeposition 59 mit voneinander beabstandeten, verschobenen Formeinsätzen 51,52. Zwischen den benachbarten verschobenen Formeinsätzen 51,52, die in Pfeilrichtung 250 auseinandergeschoben sind, tritt ein Spaltabstand 129 auf.

Die **Figuren 4 bis 7** zeigen in Detailansichten die Erfindungsidee anhand einer zweiten erfindungsgemäßen Ausführung eines erfindungsgemäßen Spritzgusswerkzeugs 1 mit verfahrbaren Formeinsätzen 51,52,53 ohne Zwischeneinsätze.

**Fig. 4** zeigt im Detail benachbarte Formeinsätze 51,52,53, die in einer Befüllposition 58 bzw. Spritzposition 58 aneinander anliegen, samt den darin befindlichen Formteilen 5 aus Kunststoff.

**Fig. 5** zeigt dieselbe Anordnung ohne Formteile aus Kunststoff. Die erste Position 2.1 der Kavität 2 wird hier beispielsweise von einem Kavitätssegment 2a des ersten Formeinsatzes 51 sowie von einem Kavitätssegment 2b des zweiten Formeinsatzes 52 gebildet. Die Kavitätssegmente 2a und 2b sind hier jeweils so geformt, dass Hinterschneidungen des herzustellenden Formteils 5 von den jeweiligen Formeinsätzen auch ohne Zwischeneinsätze geformt werden können.

Der erste Segmentabstand 110 ist der Abstand zweier Kavitätssegmente 2a,2b von zueinander benachbarten beweglichen Formeinsätzen 51,52, und zwar zwischen den Mittelachsen bzw. den Symmetrieebenen 101,102 der entsprechenden Kavitätssegmente 2a,2b der benachbarten Formeinsätze 51,52. In der geschlossenen Position des Spritzgusswerkzeugs 1 mit geschlossenen Werkzeugformhälften 10,20 entspricht der erste Segmentabstand 110 somit dem Kavitätsabstand zwischen den Mittelachsen bzw. den Symmetrieebenen von zwei zueinander benachbarten Kavitäten 2 bzw. 3.

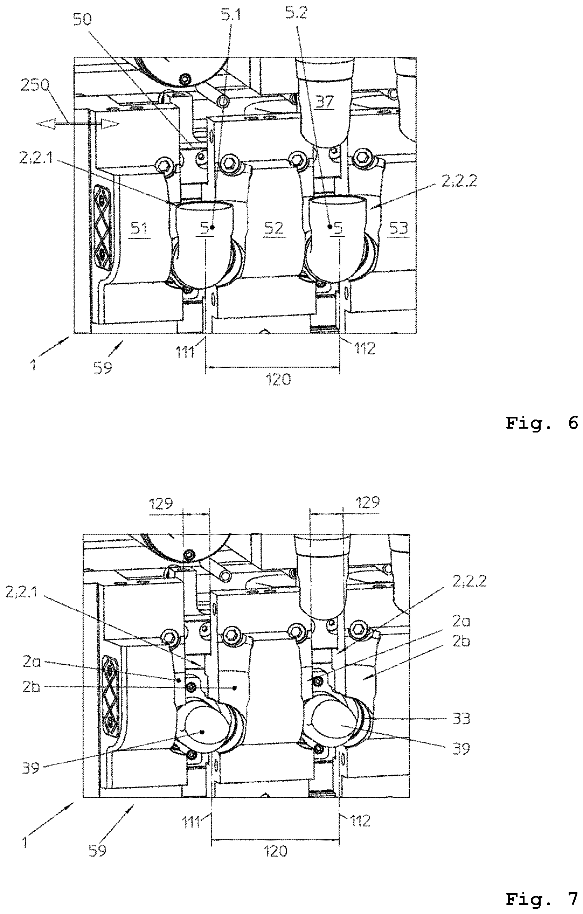

**Fig. 6** zeigt die in Fig. 4 gezeigte Anordnung mit verfahrbaren Formeinsätzen 51,52,53 in einer Entnahmeposition 59, in der benachbarte Formeinsätze 51,52 in Bewegungsrichtung 250 auseinandergefahren und voneinander beabstandet sind, samt den darin befindlichen Formteilen 5 aus Kunststoff.

**Fig. 7** zeigt die in Fig. 6 dargestellte Anordnung ohne Formteile aus Kunststoff. Wie beispielsweise an der Position 2.1 der Kavität 2 erkennbar befindet sich der betreffende Formteil 5 auf Position 5.1 noch auf einem hinteren Innenformkern 39 eines hinteren Kernschiebers 33 bzw. Kerneinsatzes 33. Die Formeinsätze 51,52 sind jedoch bereits in seitlicher Bewegungsrichtung 250 vom Formteil 5 um einen Spaltabstand 129 zwischen den Formeinsätzen 51,52 beabstandet.

Der zweite Segmentabstand 120 ist hier wiederum der Abstand zweier Kavitätssegmente 2a,2b von zueinander benachbarten beweglichen Formeinsätzen 51,52, und zwar zwischen den Mittelachsen bzw. den Symmetrieebenen 111,112 der entsprechenden Kavitätssegmente 2a,2b der benachbarten Formeinsätze 51,52 in der Entnahmeposition 59 mit voneinander beabstandeten, verschobenen Formeinsätzen 51,52.

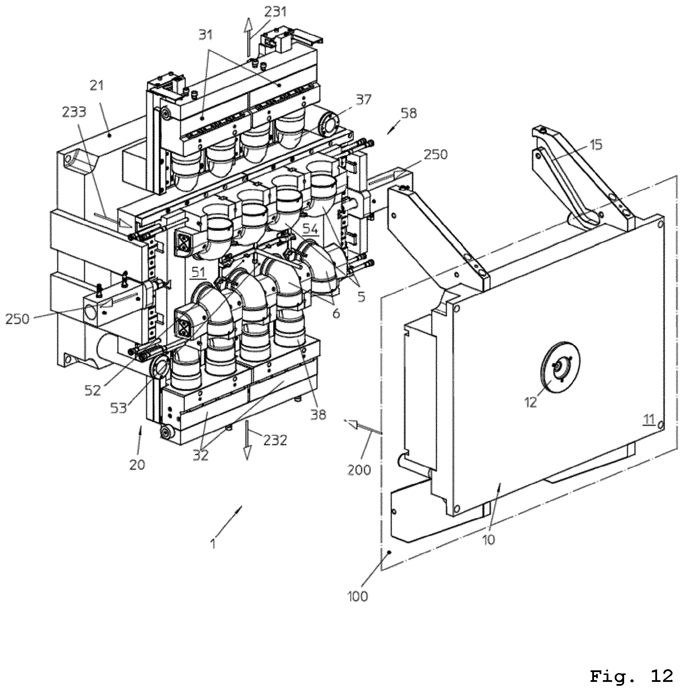

**Fig. 12** zeigt das in Fig. 2 dargestellte, geöffnete Spritzgusswerkzeug 1 während des Entformens der hinteren Innenformkerne 39.

**Fig. 13** zeigt von vorne die erste Werkzeugformhälfte 20 der in Fig. 12 dargestellten Anordnung während des Entformens der hinteren Innenformkerne 39.

**Fig. 14** zeigt eine Schnittansicht gemäß der in Fig. 13 eingezeichneten Schnittebene A-A während des Entformens der Innenformkerne 39. In der Schnittansicht ist zu erkennen, dass die oberen Innenformkerne 37 sowie die unteren Innenformkerne 38 zuvor bereits von den entsprechenden Kernschiebern 31,32 aus den Hohlräumen der Formteile 5,6 in den Bewegungsrichtungen 231 nach oben bzw. 232 nach unten herausgezogen wurden. Um die hier im Wesentlichen liegend an der Rückseite der zweiten Grundplatte 21 angeordneten hinteren Innenformkerne 39 ebenfalls entformen zu können, wird beispielsweis die zweite Werkzeugformhälfte 20 in Pfeilrichtung 233, wie in Fig. 12 eingezeichnet, von der Grundplatte 21 weggefahren in Richtung zur ersten Werkzeugformhälfte 20 hin. Die hinteren Innenformkerne 39, die hier beispielsweise starr an der Grundplatte 21 befestigt sind, werden dabei aus den nach hinten offenen Hohlräumen der Formteile 5,6 herausgefahren. Die bereits entformte Anordnung der Formteile 5,6 mit herausgezogenen hinteren Innenformkernen 39 ist in Fig. 14 dargestellt.

Ebenso wäre es im Rahmen der Erfindung denkbar, wenn die hinteren Innenformkerne 39 - kinematisch umgekehrt - von entsprechenden hinteren Kernschiebern 33, die beweglich gelagert an der Grundplatte 21 angeordnet sind, in Bewegungsrichtung 233 relativ zur Grundplatte 21 nach hinten aus den Formteilen 5,6 verfahren werden.

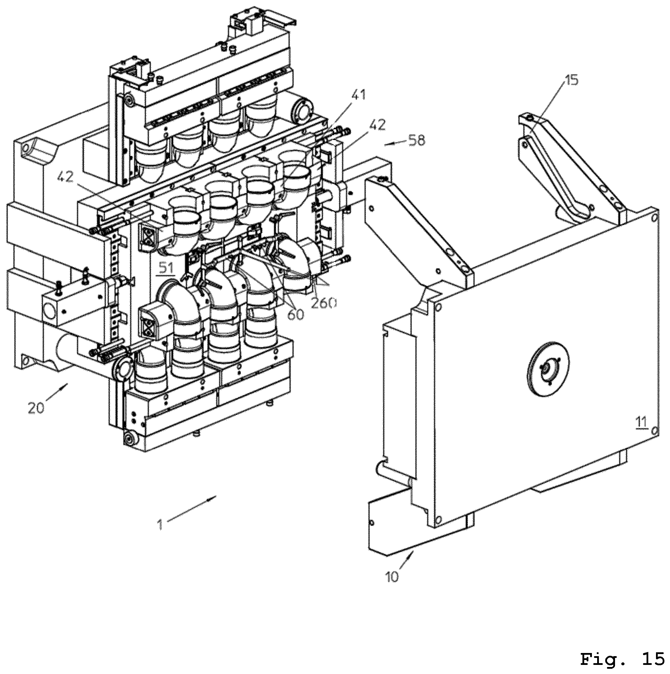

**Fig. 15** zeigt eine zu Fig. 12 vergleichbare Anordnung des erfindungsgemäßen Spritzgusswerkzeugs 1 während des Entnehmens bzw. Entfernens von Spritzgussresten aus einem Angusskanal 60. Ein Pfeil 260 symbolisiert eine Bewegungsrichtung 260, in der der Angusskanal 60 verfahren werden kann.

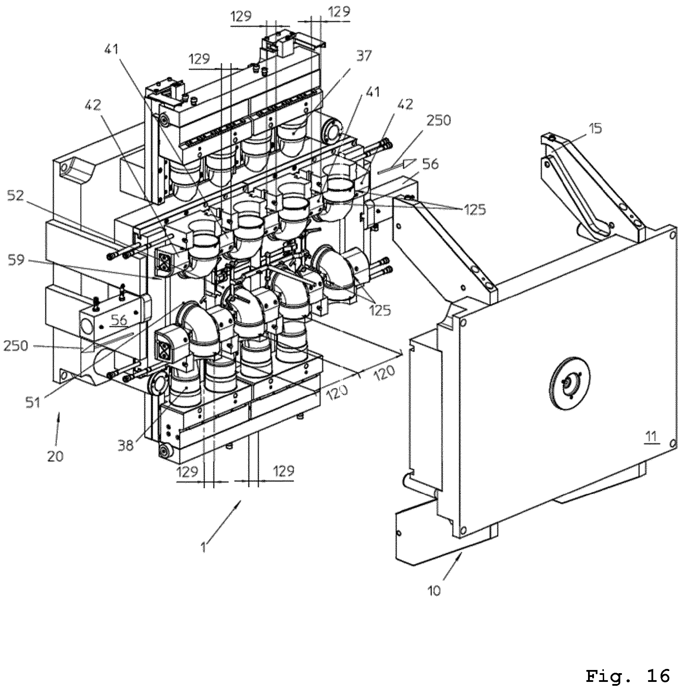

**Fig. 16** zeigt das in Fig. 2 dargestellte, geöffnete Spritzgusswerkzeug 1 mit verschobenen Formeinsätzen 51,52,53,54 sowie mit verfahrbaren Zwischeneinsätzen 41,42 in der Entnahmeposition 59, in der benachbarte Formeinsätze 51,52,53,54 voneinander um einen Spaltabstand 129 beabstandet sind, samt den darin befindlichen Formteilen 5,6 aus Kunststoff.

**Fig. 17** zeigt eine Frontalansicht der zweiten Werkzeugformhälfte 20 gemäß der in Fig. 16 dargestellten Anordnung.

**Fig. 18** zeigt das in Fig. 16 dargestellte, geöffnete Spritzgusswerkzeug 1 während der Entnahme der Formteile 5,6.

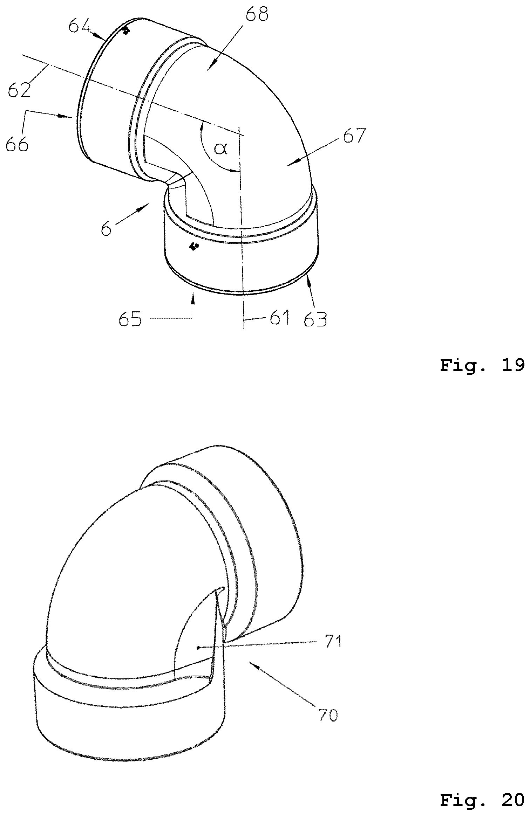

**Fig. 19** zeigt einen ersten herkömmlichen Formteil 6 aus Kunststoff, der hier beispielsweise ein Rohrfitting mit einem 90°-Bogen ist. Der Formteil 6 weist eine Längsachse 61 eines ersten rohrförmigen Formteilabschnitts sowie eine Längsachse 62 eines zweiten rohrförmigen Abschnitts auf. Der erste Abschnitt reicht von der Bogenkrümmung bis zu einem ersten Rand 63. Der zweite Abschnitt reicht von der Bogenkrümmung bis zu einem zweiten Rand 64. Der erste Abschnitt weist einen innenliegenden Hohlraum mit einer Innenform 65 bzw. Innenfläche auf. Der zweite Abschnitt des Formteils 6 weist einen innenliegenden Hohlraum mit einer Innenform 66 bzw. Innenfläche auf. Die beiden innenliegenden Hohlräume sind im Bereich der Bogenkrümmung miteinander verbunden. Der erste Abschnitt weist eine Außenform 67 bzw. Außenfläche auf. Der zweite Abschnitt weist eine Außenform 68 bzw. Außenfläche auf. Ein Winkel α zwischen den beiden Abschnitten des Formteils 6 beträgt hier beispielsweise 90°. Eine Schnittansicht dieses Formteils 6 während des Entformens im Spritzgusswerkzeug 1 zeigt Fig. 14.

**Fig. 20** zeigt ein weiteren herkömmlichen Formteil 70 aus Kunststoff. Im Unterschied zu dem in Fig. 19 gezeigten Formteil 6 weist dieser Formteil 70 - beispielsweise ebenfalls ein Fitting mit einem 90°-Bogen - jedoch an seiner Außenkontur Abschnitte 71 mit vergrößerter Wandstärke auf, um mit diesen Entnahmestegen 71, die an gegenüberliegenden Außenseiten vom Formteil 70 abstehen, die Entnahme aus einem herkömmlichen Spritzgusswerkzeug zu ermöglichen. In nachteiliger Weise wird dadurch der Materialverbrauch zur Herstellung des Formteils 70 mit den Entnahmestegen 71 vergrößert sowie die Abkühlzeit verlängert, weshalb die Herstellung des Formteils 70 unwirtschaftlich ist im Vergleich zur Herstellung des in Fig. 19 gezeigten Formteils 6 ohne solche Entnahmehilfen mit vergrößerter Wandstärke.

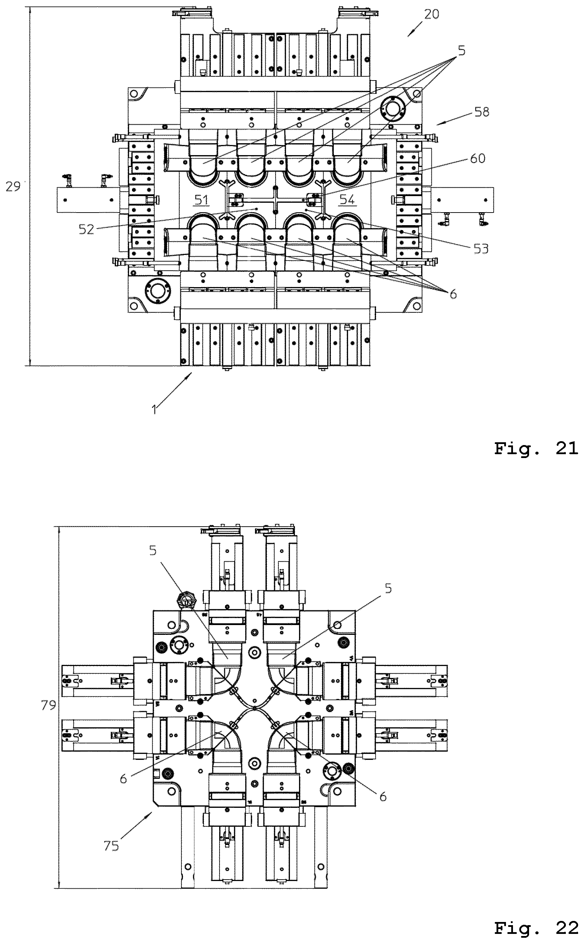

**Fig. 21** dient zum Größenvergleich mit der nachfolgenden Fig. 22 und zeigt in einer Frontalansicht die bewegliche Werkzeugformhälfte 20 des in Fig. 2 gezeigten geöffneten erfindungsgemäßen Spritzgusswerkzeugs 1 mit acht Kavitäten zur gleichzeitigen Fertigung von acht Formteilen 5,6. Die Kavitäten 2,3 sind hier stehend parallel zueinander angeordnet. Die Formeinsätze befinden sich in der Befüllposition 58. Kavitätssegmente von zueinander benachbarten Formeinsätzen 51,52,53,54 weisen einen ersten Segmentabstand 110 auf. Die benachbarten Formeinsätze liegen jeweils aneinander an. Mit dem Pfeil 29 ist eine Längenabmessung 79, hier die Bauhöhe, der gezeigten beweglichen zweiten Werkzeugformhälfte 20 gekennzeichnet.

**Fig. 22** zeigt im Vergleich zu Fig. 21 in einer Frontalansicht eine bewegliche Werkzeugformhälfte eines herkömmlichen Spritzgusswerkzeugs 75 mit vier liegenden Kavitäten zur Herstellung von vier Formteilen 5,6. Der Pfeil 79 markiert eine Längenabmessung 79, hier ebenfalls die Bauhöhe, dieser herkömmlichen beweglichen Werkzeugformhälfte des Spritzgusswerkzeugs 75. Die beiden Ansichten von Fig. 21 und Fig. 22 sind so gewählt, dass die Längenabmessungen 29 (in Fig. 21) und 79 (in Fig. 22) gleich groß sind. Wie zu erkennen ist unterscheidet sich die erfindungsgemäße Anordnung gemäß Fig. 21 bei vergleichbaren Abmessungen nicht nur durch eine verdoppelte Anzahl an gleichzeitig pro Produktionszyklus herstellbaren Formteilen 5,6, sondern auch durch eine besonders kompakte Bauweise mit einem zentralen, kurzen Angusskanal 60 gegenüber der herkömmlichen Bauweise, wie in Fig. 22 veranschaulicht.

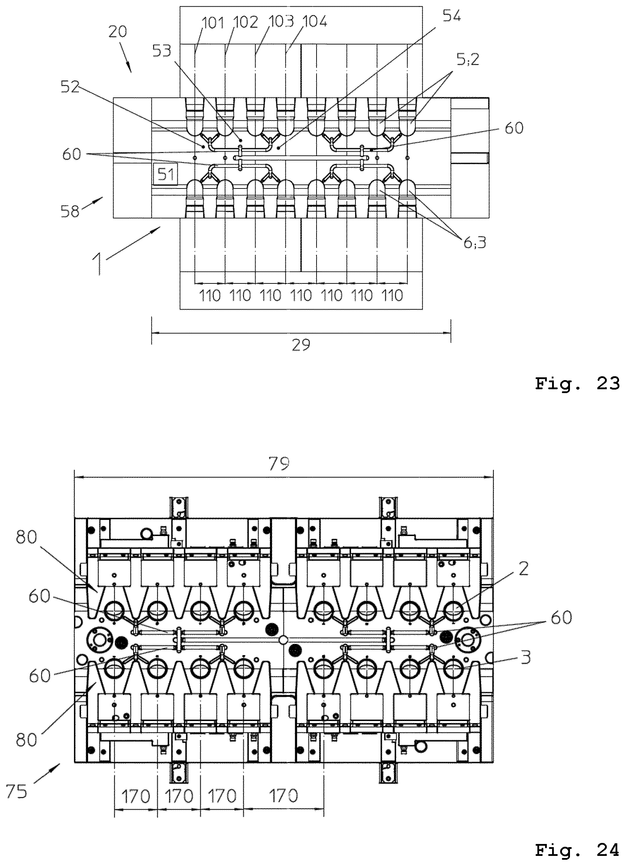

**Fig. 23** zeigt in einer Frontalansicht die bewegliche zweite Werkzeugformhälfte 20 einer dritten Ausführung eines geöffneten erfindungsgemäßen Spritzgusswerkzeugs 1 mit sechzehn Kavitäten 2,3 zur gleichzeitigen Fertigung von sechzehn Formteilen 5,6. Fig. 23 dient zum Größenvergleich mit der nachfolgenden Fig. 24. Die Kavitäten 2,3 sind hier stehend parallel zueinander angeordnet. Die Formeinsätze 51,52,53,54,... befinden sich in der Befüllposition 58. Zusätzliche Zwischeneinsätze sind hier nicht erforderlich. Die Bauweise und Funktion der hier verwendeten Formeinsätze ist vergleichbar mit dem in den Figuren 4 bis 7 System ohne Zwischenelemente. Die Kavitätssegmente von zueinander benachbarten Formeinsätzen 51,52,53,54 weisen einen ersten Segmentabstand 110 auf. Die benachbarten Formeinsätze liegen jeweils aneinander an. Mit dem Pfeil 29 ist eine Längenabmessung 79, hier die Baubreite, der gezeigten beweglichen zweiten Werkzeugformhälfte 20 gekennzeichnet. Die ersten Segmentabstände 110, die den Kavitätsabständen jeweils benachbarter Kavitäten 2,3 entsprechen, betragen hier in der Befüllposition beispielsweise 95 mm Länge. Die Angusslängen der Angusskanäle 60 sind damit ausreichend kurz, um unerwünschte Verblockungen der Angusskanäle aufgrund von erkalteter Kunststoffschmelze zu vermeiden.

**Fig. 24** in einer Frontalansicht die bewegliche Werkzeugformhälfte eines herkömmlichen Spritzgusswerkzeugs 75 mit sechszehn Kavitäten zur Herstellung von Formteilen 5,6. Der Pfeil 79 markiert eine Längenabmessung 79, hier ebenfalls die Baubreite, dieser herkömmlichen beweglichen Werkzeugformhälfte des Spritzgusswerkzeugs 75. Das herkömmliche Spritzgusswerkzeug 75 ist mit sogenannten Schrägschiebern 80 ausgestattet. Wie zu erkennen ist unterscheidet sich die erfindungsgemäße Anordnung gemäß Fig. 23 bei gleicher Anzahl an Spritzgussformteilen 5,6, die je Produktionszyklus gleichzeitig hergestellt werden können, durch die kompakten Abmessungen gegenüber der herkömmlichen Bauweise, wie in Fig. 24 veranschaulicht. Die Maßstäbe der beiden Figuren 23 und 24 sind gleich groß gewählt.

Die Längenabmessung 29 (in Fig. 23) und ist somit geringer als die Längenabmessung 79 (in Fig. 24). Oder anders ausgedrückt sind die Kavitätsabstände 170 zwischen zwei benachbarten Kavitäten 2,3 beim herkömmlichen Spritzgusswerkzeug 75 größer als die erste Segmentabstände 110 beim erfindungsgemäßen Spritzgusswerkzeug gemäß Fig. 23. Die Kavitätsabstände 170 betragen hier in Fig. 24 beispielsweise rund 120 mm Länge. Die dadurch vergrößerten Angusslängen der Angusskanäle 60 haben sich bei der herkömmlichen Bauweise des Spritzgusswerkzeugs 75 im Betrieb als problematisch herausgestellt. Im laufenden Betrieb kann es bereits zu Verblockungen der Angusskanäle kommen.

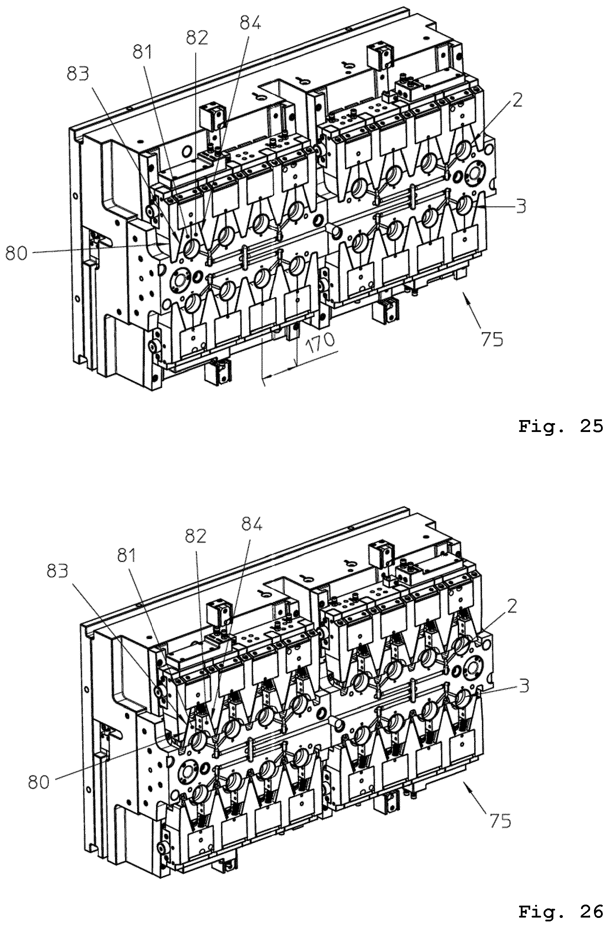

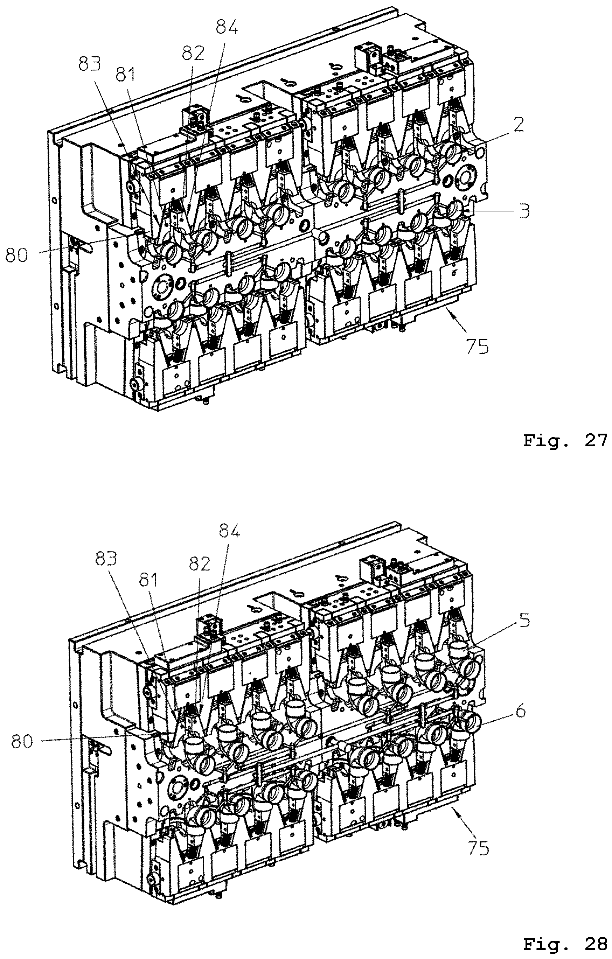

**Fig. 25 bis Fig. 28** zeigen jeweils unterschiedliche Betriebszustände des in Fig. 24 dargestellten herkömmlichen Spritzgusswerkzeugs 75. Die Kavitäten werden hier durch herkömmliche Schrägschieber 80 begrenzt, wobei je Kavität 2,3 zur Herstellung eines Formteils 5,6 jeweils einen ersten beweglichen Schrägschieber 81 und - gegenüberliegend - einen zweiten beweglichen Schrägschieber 82 aufweist. Die paarweise je Kavität 2,3 angeordneten Schrägschieber 81,82, die zum Formen von Hinterschneidungen der Formteile 5,6 dienen, sind an schräg nach oben bzw. nach unten ausgerichteten ersten Schrägschieberführungen 83 bzw. zweiten Schrägschieberführungen 84 geführt, die auch als Schlittenführungen bezeichnet werden. Im Gegensatz zur Erfindung bleibt jedoch der Abstand 170 zwischen benachbarten Kavitäten 2,3 während des Verfahrens der Schrägschieber 81,82 beim herkömmlichen Spritzgusswerkzeug 75 konstant. Fig. 28 zeigt die herkömmliche Anordnung mit entformten Formteilen 5,6.

### BEZUGSZEICHENLISTE

- 1: Spritzgusswerkzeug
- 2: (erste) Kavität; Hohlraum
2.1 erste Position der (ersten) Kavität
2.2 zweite Position der (ersten) Kavität
2.3 dritte Position der (ersten) Kavität
2.4 vierte Position der (ersten) Kavität
2a;2b Kavitätssegment (von Formeinsatz begrenzt)
2c;2d Kavitätssegment (von Zwischeneinsatz begrenzt)
- 3: (zweite bzw. weitere) Kavität; Hohlraum
3.1 erste Position der (zweiten) Kavität
3.2 zweite Position der (zweiten) Kavität
3.3 dritte Position der (zweiten) Kavität
3.4 vierte Position der (zweiten) Kavität
3a;3b Kavitätssegment (von Formeinsatz begrenzt)
3c;3d Kavitätssegment (von Zwischeneinsatz begrenzt)
- 5: (erster) Formteil; Fitting
5.1 erste Position des (ersten) Formteils
5.2 zweite Position des (ersten) Formteils
5.3 dritte Position des (ersten) Formteils
5.4 vierte Position des (ersten) Formteils
- 6: (zweiter bzw. weiterer) Formteil; Fitting
6.1 erste Position des (zweiten) Formteils
6.2 zweite Position des (zweiten) Formteils
6.3 dritte Position des (zweiten) Formteils
6.4 vierte Position des (zweiten) Formteils
- 8: geschlossene Position des Spritzgusswerkzeugs
- 9: geöffnete Position des Spritzgusswerkzeugs
- 10: (erste, starre) Werkzeugformhälfte; Düsenseite
- 11: (erste, starre) Grundplatte
- 12: Angussbuchse
- 15: Kulissenführung
- 20: (zweite, bewegliche) Werkzeugformhälfte; Auswerferseite
- 21: (zweite, bewegliche) Grundplatte
- 29: Längenabmessung der (zweiten, beweglichen) Werkzeugformhälfte
- 30: Kernschieberführung
- 31: (oberer) Kernschieber; Kerneinsatz
- 32: (unterer) Kernschieber; Kerneinsatz
- 33: (hinterer) Kernschieber; Kerneinsatz
- 35: Führungsmittel; Führungsrolle
- 37: (oberer) Innenformkern
- 38: (unterer) Innenformkern
- 39: (hinterer) Innenformkern
- 40: Zwischeneinsatzführung
- 41: (mittlerer) Zwischeneinsatz
- 42: (seitlicher) Zwischeneinsatz
- 50: Formeinsatzführung
- 51: (erster) verschiebbarer Formeinsatz
- 52: (zweiter) verschiebbarer Formeinsatz
- 53: (dritter) verschiebbarer Formeinsatz
- 54: (vierter) verschiebbarer Formeinsatz
- 55: (äußere) Formeinsatzschieber
- 56: Antrieb für (äußeren) Formeinsatzschieber
- 58: Befüllposition mit nebeneinander anliegenden Formeinsätzen
- 59: Entnahmeposition mit voneinander beabstandeten Formeinsätzen
- 60: Angusskanal (Kaltkanal)
- 61: Längsachse eines ersten Abschnitts eines Formteils (Fitting)
- 62: Längsachse eines zweiten Abschnitts eines Formteils (Fitting)
- 63: Rand des ersten Abschnitts des Formteils
- 64: Rand des zweiten Abschnitts des Formteils
- 65: Innenform bzw. Innenfläche des ersten Abschnitts des Formteils
- 66: Innenform bzw. Innenfläche des zweiten Abschnitts des Formteils
- 67: Außenform bzw. Außenfläche des ersten Abschnitts des Formteils
- 68: Außenform bzw. Außenfläche des zweiten Abschnitts des Formteils
- 70: herkömmlicher Formteil
- 71: Abschnitt mit vergrößerter Wandstärke; Entnahmesteg
- 75: herkömmliches Spritzgusswerkzeug
- 79: Längenabmessung der beweglichen Werkzeugformhälfte
- 80: herkömmlicher Schrägschieber
- 81: (erster) beweglicher Schrägschieber
- 82: (zweiter) beweglicher Schrägschieber
- 83: (erste) Schrägschieberführung; Schlittenführung
- 84: (zweite) Schrägschieberführung; Schlittenführung
- 100: Trennebene
- 101: Symmetrieebene der ersten Kavitätspositionen (geschlossen)
- 102: Symmetrieebene der zweiten Kavitätspositionen (geschlossen)
- 103: Symmetrieebene der dritten Kavitätspositionen (geschlossen)
- 104: Symmetrieebene der vierten Kavitätspositionen (geschlossen)
- 110: erster Segmentabstand (geschlossene Formeinsätze)
- 111: Symmetrieebene der ersten Kavitätspositionen (verschoben)
- 112: Symmetrieebene der zweiten Kavitätspositionen (verschoben)
- 113: Symmetrieebene der dritten Kavitätspositionen (verschoben)
- 114: Symmetrieebene der vierten Kavitätspositionen
- 120: zweiter Segmentabstand (verschobene Formeinsätze)
- 125: Spaltabstand zwischen Zwischeneinsatz und Formteil
- 129: Spaltabstand zwischen verschobenen Formeinsätzen
- 170: Abstand zwischen Kavitäten (herkömmliches Spritzgusswerkzeug)
- 200: Bewegungsrichtung der Formhälfte(n) (Pfeil)
- 231: Bewegungsrichtung des (oberen) Kernzugs (Pfeil)
- 232: Bewegungsrichtung des (unteren) Kernzugs (Pfeil)
- 233: Bewegungsrichtung des (hinteren) Kernzugs (Pfeil)
- 241: Bewegungsrichtung des (mittleren) Zwischeneinsatzes (Pfeil)
- 242: Bewegungsrichtung des (seitlichen) Zwischeneinsatzes (Pfeil)
- 250: Bewegungsrichtung der Formeinsätze (Pfeil)
- 260: Bewegungsrichtung des Angusskanals (Pfeil)
- α: Winkel zwischen Abschnitten eines Formteils (Fitting)

## Patentansprüche

1. Spritzgusswerkzeug (1) mit mehreren Kavitäten (2,3) zur Herstellung von Formteilen (5,6) insbesondere aus Kunststoff, umfassend eine erste Werkzeugformhälfte (10) und eine entlang einer Formtrennebene (100) trennbare zweite Werkzeugformhälfte (20), wobei die erste Werkzeugformhälfte (10) und die zweite Werkzeugformhälfte (20) in Bewegungsrichtung (200) relativ zueinander zwischen einer geschlossenen Position (8), in der die beiden Werkzeugformhälften (10,20) aneinander anliegen, und einer offenen Position (9), in der die beiden Werkzeugformhälften (10,20) voneinander beabstandet sind, beweglich angeordnet sind, wobei die beiden Werkzeugformhälften (10,20) in der geschlossenen Position (8) die mehreren Kavitäten (2,3) begrenzen,
**dadurch gekennzeichnet, dass**
die zweite Werkzeugformhälfte (20) zumindest zwei oder mehrere in einer Bewegungsrichtung (250) parallel zur Trennebene (100) verfahrbare Formeinsätze (51,52,53,54) umfasst, wobei jeder der zumindest zwei Formeinsätze (51,52,53,54) zumindest ein Kavitätssegment (2a,2b,3a,3b) einer Kavität (2,3) begrenzt und wobei die zumindest zwei Formeinsätze (51,52,53,54) zwischen einer Befüllposition (58) und einer Entnahmeposition (59) zum Entformen der Formteile (5,6) verfahrbar sind, wobei
in der Befüllposition (58) die Kavitätssegmente (2a,2b,3a,3b) von zueinander benachbarten sowie aneinandergrenzenden Formeinsätzen (51,52; 52,53; 53,54) einen ersten Segmentabstand (110) aufweisen, welcher erste Segmentabstand (110) einem Kavitätsabstand zwischen den Symmetrieebenen (101,102) von zwei zueinander benachbarten Kavitäten (2.1,2.2; 3.1,3.2) entspricht, und wobei
in der Entnahmeposition (59) zum Entformen der Formteile (5,6) die Kavitätssegmente (2a,2b,3a,3b) von zueinander benachbarten Formeinsätzen (51,52; 52,53; 53,54), die in seitlicher Richtung (250) auseinander gefahren sind, einen im Vergleich zum ersten Segmentabstand (110) vergrößerten zweiten Segmentabstand (120) aufweisen.

2. Spritzgusswerkzeug (1) nach Anspruch 1, **dadurch gekennzeichnet, dass** jeder Formeinsatz (51,52,53,54) zumindest ein Kavitätssegment (2a,2b,3a,3b) je einer Kavität (2,3) begrenzt.

3. Spritzgusswerkzeug (1) nach Anspruch 1 oder 2, **dadurch gekennzeichnet, dass** zumindest ein Formeinsatz (51,52,53,54) zumindest je ein Kavitätssegment (2a,2b,3a,3c) zweier oder mehrerer Kavitäten (2,3) begrenzt.

4. Spritzgusswerkzeug (1) nach einem der Ansprüche 1 bis 3, **dadurch gekennzeichnet, dass** in der Befüllposition (58) die zueinander benachbarten Formeinsätze (51,52; 52,53; 53,54) jeweils zumindest abschnittsweise aneinander anliegen, vorzugsweise flächig aneinander anliegen.

5. Spritzgusswerkzeug (1) nach einem der Ansprüche 1 bis 4, **dadurch gekennzeichnet, dass** in der Entnahmeposition (59) die zueinander benachbarten Formeinsätze (51,52; 52,53; 53,54) jeweils, vorzugsweise mit demselben Spaltabstand (129), voneinander beabstandet sind.

6. Spritzgusswerkzeug (1) nach einem der Ansprüche 1 bis 5, **dadurch gekennzeichnet, dass** zumindest ein Innenformkern (37,38,39) in zumindest einer Kavität (2,3) in einer Bewegungsrichtung (231,232,233) relativ zur zweiten Werkzeugformhälfte (20) verfahrbar angeordnet und zum Herstellen von Innenformabschnitten (65,66) der Formteile (5,6) führbar ist.

7. Spritzgusswerkzeug (1) nach Anspruch 6, **dadurch gekennzeichnet, dass** die Bewegungsrichtung (250) der verfahrbaren Formeinsätze (51,52,53,54) im Wesentlichen orthogonal orientiert ist zur Bewegungsrichtung (231,232) eines Innenformkerns (37,38), der zum Entformen von Innenformabschnitten (65,66) der Formteile (5,6) parallel zur Trennebene (100) führbar ist.

8. Spritzgusswerkzeug (1) nach einem der Ansprüche 1 bis 7, **dadurch gekennzeichnet, dass** die mehreren Kavitäten (2,3) zumindest abschnittsweise parallel zueinander angeordnet sind.

9. Spritzgusswerkzeug (1) nach einem der Ansprüche 1 bis 8, **dadurch gekennzeichnet, dass** die zumindest zwei oder mehreren Formeinsätze (51,52,53,54) in einer gemeinsamen Bewegungsrichtung (250), vorzugsweise entlang einer gemeinsamen Formeinsatzführung (50), parallel zueinander verfahrbar sind.

10. Spritzgusswerkzeug (1) nach einem der Ansprüche 1 bis 9, **dadurch gekennzeichnet, dass** zumindest ein Formeinsatz (51,52,53,54), vorzugsweise sämtliche Formeinsätze (51,52,53,54), einteilig gestaltet ist bzw. sind.

11. Spritzgusswerkzeug (1) nach einem der Ansprüche 1 bis 10, **dadurch gekennzeichnet, dass** zumindest zwei oder mehrere Zwischeneinsätze (41,42) an der zweiten Werkzeugformhälfte (20) parallel zur Trennebene (100) verfahrbar angeordnet sind, wobei jeder der zumindest zwei Zwischeneinsätze (41,42) zumindest ein Kavitätssegment (2c,2d,3c,3d) einer Kavität (2,3) eines Formteils (5,6) begrenzt und in der Befüllposition (58) in Blickrichtung orthogonal zur Trennebene (100) gesehen mittig an zwei benachbarten Formeinsätzen (51,52; 52,53; 53,54) oder seitlich an einem Formeinsatz (51,52,53,54) angeordnet ist.

12. Spritzgusswerkzeug (1) nach einem der Ansprüche 1 bis 11, **dadurch gekennzeichnet, dass** zumindest ein Formeinsatz (51,52,53,54), vorzugsweise sämtliche Formeinsätze (51,52,53,54), mehrteilig gestaltet ist bzw. sind und der zumindest eine Formeinsatz (51,52,53,54) zumindest einen Zwischeneinsatz (41,42) umfasst, welcher Zwischeneinsatz (41,42) in der Befüllposition (58) in Blickrichtung orthogonal zur Trennebene (100) gesehen mittig zwischen zwei Kavitätssegmenten (2a,2b,3a,3b) benachbarter Formeinsätze (51,52; 52,53; 53,54) oder seitlich eines der Kavitätssegmente (2a,2b,3a,3b) angeordnet ist.

13. Spritzgusswerkzeug (1) nach Anspruch 12, **dadurch gekennzeichnet, dass** der zumindest eine Zwischeneinsatz (41,42) mit dem zumindest einen Formeinsatz (51,52,53,54) bewegungsmäßig gekoppelt ist.

14. Spritzgusswerkzeug (1) nach einem der Ansprüche 11 bis 13, **dadurch gekennzeichnet, dass** die Bewegungsrichtung (241,242) der Zwischeneinsätze (41,42) parallel zur Bewegungsrichtung (250) der Formeinsätze (51,52,53,54) orientiert ist.

15. Spritzgusswerkzeug (1) nach einem der Ansprüche 1 bis 14, **dadurch gekennzeichnet, dass** mehrere Kavitäten (2,3) mit einem gemeinsamen Angusskanal (60), vorzugsweise sämtliche Kavitäten (2,3) mit einem einzigen Angusskanal (60), verbunden sind.

16. Verfahren zur Herstellung von Formteilen (5,6) insbesondere aus Kunststoff, umfassend die folgenden Schritte:
- Bereitstellen eines Spritzgusswerkzeugs (1) mit mehreren Kavitäten (2,3), umfassend eine erste Werkzeugformhälfte (10) und eine entlang einer Formtrennebene (100) trennbare zweite Werkzeugformhälfte (20), wobei in einer geschlossenen Position (8) des Spritzgusswerkzeugs (1) beide Werkzeugformhälften (10,20) aneinander anliegen und die mehreren Kavitäten (2,3) begrenzen;
- Spritzgießen von Formteilen (5,6) in den Kavitäten (2,3);
- Verfahren des Spritzgusswerkzeugs (1) in eine offene Position (9) mit voneinander beabstandeten Werkzeugformhälften (10,20);
- Freigeben der Kavitäten (2,3), wobei zum Entformen der Formteile (5,6) Kavitätssegmente (2a,2b,3a,3b), die an einer Werkzeugformhälfte (20) angeordnet sind, aus einer Befüllposition (58) in einer Bewegungsrichtung (250) parallel zur Trennebene (100) in eine Entnahmeposition (59) verfahren werden, wobei in der Befüllposition (58) zueinander benachbarte sowie aneinandergrenzende Kavitätssegmente (2a,2b,3a,3b) einen ersten Segmentabstand (110) aufweisen, welcher erste Segmentabstand (110) einem Kavitätsabstand zwischen den Symmetrieebenen (101,102) von zwei zueinander benachbarten Kavitäten (2.1,2.2; 3.1,3.2) entspricht, und wobei in der Entnahmeposition (59) zum Entformen der Formteile (5,6) die Kavitätssegmente (2a,2b,3a,3b) von zueinander benachbarten Formeinsätzen (51,52; 52,53; 53,54), die in seitlicher Richtung (250) auseinander gefahren sind, einen im Vergleich zum ersten Segmentabstand (110) vergrößerten zweiten Segmentabstand (120) aufweisen.

## Claims

1. Injection mold (1) having multiple cavities (2, 3) for producing molded parts (5, 6), in particular from plastic, comprising a first mold half (10) and a second mold half (20) separable along a mold separating plane (100), wherein the first mold half (10) and the second mold half (20) are arranged to be movable in the movement direction (200) relative to one another between a closed position (8), in which the two mold halves (10, 20) press against one another, and an open position (9), in which the two mold halves (10, 20) are spaced apart from one another, wherein the two mold halves (10, 20) delimit the multiple cavities (2, 3) in the closed position (8),
**characterized in that**
the second mold half (20) comprises at least two or more mold inserts (51, 52, 53, 54) movable in a movement direction (250) parallel to the separating plane (100), wherein each of the at least two mold inserts (51, 52, 53, 54) delimits at least one cavity segment (2a, 2b, 3a, 3b) of a cavity (2, 3) and wherein the at least two mold inserts (51, 52, 53, 54) are movable between a filling position (58) and a removal position (59) for demolding the molded parts (5, 6), wherein
in the filling position (58), the cavity segments (2a, 2b, 3a, 3b) of mold inserts (51, 52; 52, 53; 53, 54) adjacent to one another and joining one another have a first segment distance (110), which first segment distance (110) corresponds to a cavity distance between the planes of symmetry (101, 102) of two cavities (2.1, 2.2; 3.1, 3.2) adjacent to one another, and wherein
in the removal position (59) for demolding the molded parts (5, 6), the cavity segments (2a, 2b, 3a, 3b) of mold inserts (51, 52; 52, 53; 53, 54) adjacent to one another, which are moved apart from one another in the lateral direction (250), have a second segment distance (120) enlarged in comparison to the first segment distance (110).

2. Injection mold (1) as claimed in claim 1, **characterized in that** each mold insert (51, 52, 53, 54) delimits at least one cavity segment (2a, 2b, 3a, 3b) of one cavity (2, 3) each.

3. Injection mold (1) as claimed in claim 1 or 2, **characterized in that** at least one mold insert (51, 52, 53, 54) delimits at least one cavity segment (2a, 2b, 3a, 3c) of two or more cavities (2, 3) each.

4. Injection mold (1) as claimed in any one of claims 1 to 3, **characterized in that,** in the filling position (58), mold inserts (51, 52; 52, 53; 53, 54) adjacent to one another each press against one another at least in sections, preferably press flatly against one another.

5. Injection mold (1) as claimed in any one of claims 1 to 4, **characterized in that,** in the removal position (59), the mold inserts (51, 52; 52, 53; 53, 54) adjacent to one another are each spaced apart from one another, preferably at the same gap distance (129).

6. Injection mold (1) as claimed in any one of claims 1 to 5, **characterized in that** at least one inner mold core (37, 38, 39) is arranged to be movable in at least one cavity (2, 3) in a movement direction (231, 232, 233) relative to the second mold half (20) and can be guided to produce inner molded sections (65, 66) of the molded parts (5, 6).

7. Injection mold (1) as claimed in claim 6, **characterized in that** the movement direction (250) of the movable mold inserts (51, 52, 53, 54) is oriented essentially orthogonally to the movement direction (231, 232) of an inner mold core (37, 38), which can be guided parallel to the separating plane (100) to demold inner molded sections (65, 66) of the molded parts (5, 6).

8. Injection mold (1) as claimed in any one of claims 1 to 7, **characterized in that** the multiple cavities (2, 3) are arranged parallel to one another at least in some sections.

9. Injection mold (1) as claimed in any one of claims 1 to 8, **characterized in that** the at least two or more mold inserts (51, 52, 53, 54) are movable parallel to one another in a common movement direction (250), preferably along a common mold insert guide (50).

10. Injection mold (1) as claimed in any one of claims 1 to 9, **characterized in that** at least one mold insert (51, 52, 53, 54), preferably all mold inserts (51, 52, 53, 54), is or are formed in one piece.

11. Injection mold (1) as claimed in any one of claims 1 to 10, **characterized in that** at least two or more intermediate inserts (41, 42) are arranged to be movable on the second mold half (20) parallel to the separating plane (100), wherein each of the at least two intermediate inserts (41, 42) delimits at least one cavity segment (2c, 2d, 3c, 3d) of the cavity (2, 3) of a molded part (5, 6) and, in the filling position (58) viewed in the viewing direction orthogonal to the separating plane (100), is arranged in the middle on two adjacent mold inserts (51, 52; 52, 53; 53, 54) or laterally on one mold insert (51, 52, 53, 54).

12. Injection mold (1) as claimed in any one of claims 1 to 11, **characterized in that** at least one mold insert (51, 52, 53, 54), preferably all mold inserts (51, 52, 53, 54), is or are formed in multiple pieces and the at least one mold insert (51, 52, 53, 54) comprises at least one intermediate inserts (41, 42), which intermediate insert (41, 42) is arranged in the filling position (58), viewed in the viewing direction orthogonal to the separating plane (100), centrally between two cavity segments (2a, 2b, 3a, 3b) of adjacent mold inserts (51, 52; 52, 53; 53, 54) or laterally to one of the cavity segments (2a, 2b, 3a, 3b).

13. Injection mold (1) as claimed in claim 12, **characterized in that** the at least one intermediate insert (41, 42) is coupled with respect to movement with the at least one mold insert (51, 52, 53, 54).

14. Injection mold (1) as claimed in any one of claims 11 to 13, **characterized in that** the movement direction (241, 242) of the intermediate inserts (41, 42) is oriented parallel to the movement direction (250) of the mold inserts (51, 52, 53, 54).

15. Injection mold (1) as claimed in any one of claims 1 to 14, **characterized in that** multiple cavities (2, 3) are connected to a common runner channel (60), preferably all cavities (2, 3) are connected to a single runner channel (60).

16. Method for producing molded parts (5, 6), in particular from plastic, comprising the following steps:
- providing an injection mold (1) having multiple cavities (2, 3), comprising a first mold half (10) and a second mold half (20) separable along a mold separating plane (100), wherein in a closed position (8) of the injection mold (1), both mold halves (10, 20) press against one another and delimit the multiple cavities (2, 3);
- injection molding molded parts (5, 6) in the cavities (2, 3);
- moving the injection mold (1) into an open position (9) having mold halves (10, 20) spaced apart from one another;
- releasing the cavities (2, 3), wherein to demold the molded parts (5, 6), cavity segments (2a, 2b, 3a, 3b) which are arranged on one mold half (20) are moved from a filling position (58) in a movement direction (250) parallel to the separating plane (100) into a removal position (59), wherein in the filling position (58), cavity segments (2a, 2b, 3a, 3b) adjacent to one another and adjoining one another have a first segment distance (110), which first segment distance (110) corresponds to a cavity distance between the planes of symmetry (101, 102) of two cavities (2.1, 2.2; 3.1, 3.2) adjacent to one another, and wherein in the removal position (59) for demolding the molded parts (5, 6), the cavity segments (2a, 2b, 3a, 3b) of mold inserts (51, 52; 52, 53; 53, 54) adjacent to one another, which are moved apart from one another in the lateral direction (250), have a second segment distance (120) enlarged in comparison to the first segment distance (110).

## Revendications

1. Outil de moulage par injection (1) possédant plusieurs cavités (2, 3) pour la fabrication de pièces moulées (5, 6) en particulier en matière plastique, comprenant une première moitié de moule d'outil (10) et une deuxième moitié de moule d'outil (20) qui peut être séparée dans un plan de séparation de l'outil (100), dans lequel la première moitié de moule d'outil (10) et la deuxième moitié de moule d'outil (20) sont disposées de façon à pouvoir se déplacer dans le sens de déplacement (200) l'une par rapport à l'autre entre une position fermée (8), dans laquelle les deux moitiés de moule d'outil (10, 20) reposent l'une contre l'autre, et une position ouverte (9), dans laquelle les deux moitiés de moule d'outil (10, 20) sont écartées l'une de l'autre, les deux moitiés de moule d'outil (10, 20) délimitant les plusieurs cavités (2, 3) dans la position fermée (8),
**caractérisé en ce que** la deuxième moitié de moule d'outil (20) comprend au moins deux ou plusieurs inserts de moules (51, 52, 53, 54) déplaçables dans un sens de déplacement (250) parallèle au plan de séparation (100), chacun des au moins deux inserts de moule (51, 52, 53, 54) délimitant au moins un segment de cavité (2a, 2b, 3a, 3b) d'une cavité (2, 3) et les au moins deux inserts de moule (51, 52, 53, 54) étant déplaçables entre une position de remplissage (58) et une position de retrait (59) en vue du démoulage des pièces moulées (5, 6),
les segments de cavité (2a, 2b, 3a, 3b) présentant, dans la position de remplissage (58), une première distance des segments (110) par rapport aux inserts de moule (51, 52 ; 52, 53 ; 53, 54) voisins les uns des autres et contigus, laquelle première distance des segments (110) correspond à une distance des cavités entre les plans de symétrie (101, 102) de deux cavités (2.1, 2.2 ; 3.1, 3.2) voisines l'une de l'autre, et
les segments de cavité (2a, 2b, 3a, 3b) présentant, dans la position de retrait (59) pour le démoulage des pièces moulées (5, 6), une deuxième distance (120) augmentée par rapport à la première distance des segments (110) par rapport aux inserts de moule (51, 52 ; 52, 53 ; 53, 54) voisins les uns des autres écartés dans le sens latéral (250).

2. Outil de moulage par injection (1) selon la revendication 1, **caractérisé en ce que** chaque insert de moule (51, 52, 53, 54) délimite au moins un segment de cavité (2a, 2b, 3a, 3b) d'une cavité (2, 3) correspondante.

3. Outil de moulage par injection (1) selon la revendication 1 ou 2, **caractérisé en ce qu'**au moins un insert de moule (51, 52, 53, 54) délimite au moins un segment de cavité (2a, 2b, 3a, 3c) respectif de deux ou plusieurs cavités (2, 3).

4. Outil de moulage par injection (1) selon l'une des revendications 1 à 3, **caractérisé en ce que**, dans la position de remplissage (58), les inserts de moule (51, 52 ; 52, 53 ; 53, 54) voisins les uns des autres reposent au moins par sections les uns sur les autres, de préférence reposent à plat les uns sur les autres.

5. Outil de moulage par injection (1) selon l'une des revendications 1 à 4, **caractérisé en ce que**, dans la position de retrait (59), les inserts de moule (51, 52 ; 52, 53 ; 53, 54) voisins les uns des autres sont écartés les uns des autres, de préférence de la même distance d'écartement (129).

6. Outil de moulage par injection (1) selon l'une des revendications 1 à 5, **caractérisé en ce qu'**au moins un noyau de moule intérieur (37, 38, 39) est disposé dans au moins une cavité (2, 3) de façon déplaçable dans un sens de déplacement (231, 232, 233) par rapport à la deuxième moitié de moule d'outil (20) et peut être guidé pour fabriquer des sections moulées intérieures (65, 66) des pièces moulées (5, 6).

7. Outil de moulage par injection (1) selon la revendication 6, **caractérisé en ce que** le sens de déplacement (250) des inserts de moule (51, 52, 53, 54) déplaçables est sensiblement perpendiculaire au sens de déplacement (231, 232) d'un noyau de moule intérieur (37, 38) qui peut être guidé parallèlement au plan de séparation (100) pour démouler des sections moulées intérieures (65, 66) des pièces moulées (5, 6).

8. Outil de moulage par injection (1) selon l'une des revendications 1 à 7, **caractérisé en ce que** les plusieurs cavités (2, 3) sont disposées, au moins par sections, parallèlement les unes aux autres.

9. Outil de moulage par injection (1) selon l'une des revendications 1 à 8, **caractérisé en ce que** les au moins deux ou plusieurs inserts de moule (51, 52, 53, 54) peuvent se déplacer parallèlement les uns aux autres dans un sens de déplacement (250) commun, de préférence le long d'un guide d'insert de moule (50) commun.

10. Outil de moulage par injection (1) selon l'une des revendications 1 à 9, **caractérisé en ce qu'**au moins un insert de moule (51, 52, 53, 54), de préférence tous les inserts de moule (51, 52, 53, 54), sont formés d'une seule pièce.

11. Outil de moulage par injection (1) selon l'une des revendications 1 à 10, **caractérisé en ce qu'**au moins deux ou plusieurs inserts intercalaires (41, 42) sont disposés de façon déplaçable parallèlement au plan de séparation (100) sur la deuxième moitié de moule d'outil (20), chacun des au moins deux inserts intercalaires (41, 42) délimitant au moins un segment de cavité (2c, 2d, 3c, 3d) d'une cavité (2, 3) d'une pièce moulée (5, 6) et étant disposé dans la position de remplissage (58), en vue perpendiculaire au plan de séparation (100), au milieu entre deux inserts de moule (51, 52 ; 52, 53 ; 53, 54) voisins ou sur le côté d'un insert de moule (51, 52, 53, 54).

12. Outil de moulage par injection (1) selon l'une des revendications 1 à 11, **caractérisé en ce qu'**au moins un insert de moule (51, 52, 53, 54), de préférence tous les inserts de moule (51, 52, 53, 54), sont en plusieurs parties et l'au moins un insert de moule (51, 52, 53, 54) comprend au moins un insert intercalaire (41, 42), lequel insert intercalaire (41, 42) est disposé, dans la position de remplissage (58), en vue perpendiculaire au plan de séparation (100), au milieu entre deux segments de cavité (2a, 2b, 3a, 3b) d'inserts de moule (51, 52 ; 52, 53 ; 53, 54) voisins ou sur le côté d'un des segments de cavité (2a, 2b, 3a, 3b).

13. Outil de moulage par injection (1) selon la revendication 12, **caractérisé en ce que** l'au moins un insert intercalaire (41, 42) est couplé avec l'au moins un insert de moule (51, 52, 53, 54) dans ses déplacements.

14. Outil de moulage par injection (1) selon l'une des revendications 11 à 13, **caractérisé en ce que** le sens de déplacement (241, 242) des inserts intercalaires (41, 42) est orienté parallèlement au sens de déplacement (250) des inserts de moule (51, 52, 53, 54).

15. Outil de moulage par injection (1) selon l'une des revendications 1 à 14, **caractérisé en ce que** plusieurs cavités (2, 3) communiquent avec un canal de coulée (60) commun, de préférence toutes les cavités (2, 3) avec un seul canal de coulée (60).

16. Procédé pour la fabrication de pièces moulées (5, 6) en particulier en matière plastique, comprenant les étapes suivantes :
- préparation d'un outil de moulage par injection (1) possédant plusieurs cavités (2, 3), comprenant une première moitié de moule d'outil (10) et une deuxième moitié de moule d'outil (20) qui peut être séparée dans un plan de séparation de l'outil (100), dans lequel les deux moitiés de moule d'outil (10, 20) reposent l'une contre l'autre et délimitent les plusieurs cavités (2, 3) dans une position fermée (8) de l'outil de moulage par injection (1) ;
- moulage par injection de pièces moulées (5, 6) dans les cavités (2, 3) ;
- déplacement de l'outil de moulage par injection (1) dans une position (9) ouverte où les moitiés de moule d'outil (10, 20) sont écartées l'une de l'autre ;
- dégagement des cavités (2, 3), lors duquel des segments de cavité (2a, 2b, 3a, 3b) disposés sur une moitié de moule d'outil (20) sont déplacés d'une position de remplissage (58) à une position de retrait (59) dans un sens de déplacement (250) parallèle au plan de séparation (100) pour le démoulage des pièces moulées (5, 6), des segments de cavité (2a, 2b, 3a, 3b) voisins les uns des autres et contigus dans la position de remplissage (58) présentant une première distance des segments (110), laquelle première distance des segments (110) correspond à un écart des cavités entre les plans de symétrie (101, 102) de deux cavités (2.1, 2.2 ; 3.1, 3.2) voisines l'une de l'autre, et les segments de cavité (2a, 2b, 3a, 3b) d'inserts de moule (51, 52 ; 52, 53 ; 53, 54) voisins les uns des autres, qui sont écartés dans le sens latéral (250) pour le démoulage des pièces moulées (5, 6), présentant dans la position de retrait (59) une deuxième distance des segments (120) agrandie par rapport à la première distance des segments (110).
